# EUROPEAN PATENT SPECIFICATION

(11) **EP 3 183 622 B1**
(45) Date of publication and mention of the grant of the patent: **22.09.2021**
(21) Application number: 15835656.8
(22) Date of filing: 26.08.2015
(51) Int. Cl.: G05B 23/02, G05B 19/418, G06F 11/07, H04L 12/24, G05B 17/02

(54) **POPULATION-BASED LEARNING WITH DEEP BELIEF NETWORKS**
POPULATIONSBASIERTES LERNEN MIT DEEP-BELIEF-NETZWERK
APPRENTISSAGE BASÉ SUR UNE POPULATION ET INCLUANT DES RÉSEAUX DE CROYANCES PROFONDES

(30) Priority: 26.08.2014 US 201462042194 P; 26.08.2014 US 201414469535
(43) Date of publication of application: 28.06.2017
(73) Proprietor: Mtelligence Corporation, San Diego, CA 92108 (US)
(72) Inventor: BATES, Alexander B., San Diego, California 92101 (US); KIM, Caroline, San Francisco, California 94114 (US); RAHILLY, Paul, San Diego, California 92106 (US)
(74) Representative: Driver, Virginia Rozanne
(86) International application number: PCT/US2015/047047
(87) International publication number: WO 2016/033247

(56) References cited:
- EP-A1- 1 022 632
- JP-A- 2013 058 222
- US-A1- 2008 271 057
- US-A1- 2010 152 878
- US-A1- 2013 030 765
- US-A1- 2013 191 681
- US-A1- 2013 226 492
- US-A1- 2013 268 241
- US-A1- 2014 088 893

## Description

### CROSS-REFERENCE TO RELATED APPLICATIONS

This application claims priority under 35 U.S.C. § 119(e) to United States Provisional Patent Application Serial No. 62/042,194, entitled POPULATION-BASED LEARNING WITH DEEP BELIEF NETWORKS, filed on August 26, 2014, and is a continuation-in-part of Application Serial No. 14/469,535, entitled AUTOMATED PLANT ASSET FAILURE PREDICTION USING FAILURE INFORMATION TRANSFERRED BETWEEN PLANTS CONSISTENT WITH A UNIVERSAL EQUIPMENT TAXONOMY filed on August 26, 2014, which claims priority to United States Provisional Patent Application Serial No. 61/870,170, entitled AUTOMATED PLANT ASSET FAILURE PREDICTION USING FAILURE INFORMATION TRANSFERRED BETWEEN PLANTS CONSISTENT WITH A UNIVERSAL EQUIPMENT TAXONOMY, filed on August 26, 2013.

### FIELD

The present disclosure relates generally to monitoring of equipment or other assets within a plant or industrial context and, more particularly, to systems and methods for predicting failure of such assets.

### BACKGROUND

Large manufacturers today face extreme margin pressures from low-cost producers, rising energy costs, and regulatory and environmental restrictions. At the same time, environmental, health & safety compliance cannot be compromised. The need to improve asset performance has never been greater.

However, one of the greatest challenges for effectively improving plant asset performance is that the necessary information is scattered across disconnected silos of data in each department. Furthermore, it is difficult to integrate these silos due to several fundamental differences. For example, control system data is real-time data measured in terms of seconds, whereas maintenance cycle data is generally measured in terms of calendar based maintenance (e.g., days, weeks, months, quarters, semi-annual, annual), and financial cycle data is measured in terms of fiscal periods. Industrial equipment vendors and enterprise software vendors tend to have proprietary coding schemes (e.g. work order status codes) and are non compliant with any universal standard.

US2010/0152878A1 discloses a system and a method for maintaining and analysing manufacturing equipment. The system includes an embedded forecast device (EFD) configured in the manufacturing equipment and a server in communication with the EFD. The EFD is built in with a feature extraction (FE) algorithm and a forecast model (FM), so as to obtain a real time data of the manufacturing equipment and carry out forecasts on the manufacturing equipment to generate a forecast result. The server has various types of FE algorithms and modelling algorithms, which are selected and combined by a user for training and building a required FM and setting related parameters. The embedded forecast device also has a novelty detection model (NDM), which is capable of informing the server to retrain the models when the manufacturing equipment fails and then to update the FM and the NDM of the embedded forecast device.

EP1022632A1 discloses a monitoring diagnostic apparatus for detecting the normal or abnormal functionality of electrical devices such as circuit breakers, switches, disconnecting switches, oil-insulated electrical equipment, vacuum-insulated electrical equipment, air-insulated electrical equipment, solid insulated electrical equipment, through the use of a neural network to model the normal or abnormal functionality of the electrical device and to identify the cause of said abnormal functionality, if present.

US2013/268241A1 discloses mechanisms for generating an analysis result about a machine.

### SUMMARY

In one aspect the disclosure relates to a method for using failure signature information to monitor operation of one or more monitored units of equipment configured with sensors, the method comprising:
identifying a first target set of equipment being a first plurality of units of equipment, wherein each equipment unit of the first plurality of units of equipment is characterized by a first plurality of matching target parameters and wherein the one or more monitored units of equipment includes at least one unit of equipment not included in the first target set of equipment;
receiving sensor data from sensors associated with the first plurality of units of equipment;
storing failure signatures, contained in the received sensor data, in a known failure signature database;
training, using a learning agent training module , a failure agent to learn to detect operational conditions associated with onset of an equipment failure by identifying patterns or relationships within the sensor data by learning to discriminate between first normal baseline data and a first training set of failure signatures wherein the first normal baseline data is derived from a portion of the sensor data associated with operation of the first plurality of units of equipment in a normal mode and wherein the first training set of first failure signatures is derived from a portion of the sensor data associated with operation of the first plurality of units of equipment in a failure mode;
determining for the first target set of equipment, using a processor, whether the failure agent is configured to accurately detect operational conditions associated with onset of an equipment failure to discriminate between the first normal baseline data and the first training set of failure signatures by testing the failure agent on example failures of a first validation set of failure signatures selected from the sensor data associated with operation of the first plurality of units of equipment in the failure mode;
receiving monitored sensor signals produced by one or more monitoring sensors of the at least one unit of equipment not included in the first target set of equipment; and
if the failure agent is determined to be configured to accurately detect operational conditions associated with onset of an equipment failure, activating the learning agent training module, wherein:
   said activating includes:
      i) if the one or more monitoring sensors comprises a subset of sensors of the first target set of equipment, using the failure agent to monitor data included within the received monitored sensor signals; and
      ii) if the one or more monitoring sensors comprises at least one more sensor than units of equipment in the first target set of equipment, retraining the failure agent for the at least one unit of equipment not included in the first target set of equipment using default parameters from the failure agent, and flatlined past history for the at least one more sensor; and
   said monitoring includes detecting, from patterns or relationships within the data included within the received monitored sensor signals, an operational condition identifying an equipment failure onset of the at least one unit of equipment and thereby enable prediction of failure of the at least one unit of equipment in the failure mode.

The method may also involve identifying a second target set of equipment being a second plurality of units of equipment, wherein each equipment unit of the second plurality of units of equipment is characterized by a second plurality of matching target parameters, the second plurality of matching target parameters are a subset of the first plurality of matching target parameters and wherein the one or more monitored units of equipment include at least one unit of equipment not included in the second target set of equipment;
receiving sensor data from sensors associated with the second plurality of units of equipment;
training, using a learning agent training module operating on the received sensor data from the sensors associated with the second plurality of units of equipment, a failure agent to learn to detect operational conditions associated with onset of an equipment failure by identifying patterns or relationships within the sensor data by learning to discriminate between second normal baseline data and a second training set of failure signatures; wherein the second normal baseline data is derived from a portion of the sensor data associated with operation of the second plurality of units of equipment in normal mode and wherein the second training set of failure signatures is derived from a portion of the sensor data associated with operation of the second plurality of units of equipment in failure mode;
determining for the second target set of equipment, using the processor, whether the failure agent is configured to accurately detect operational conditions associated with onset of an equipment failure to discriminate between the second normal baseline data and the second training set of failure signatures by testing the failure agent on example failures of a second validation set of failure signatures selected from sensor data associated with operation of the second plurality of units of equipment in the failure mode;
receiving monitored sensor signals produced by one or more monitoring sensors of the at least one unit of equipment not included in the second target set of equipment; and
if the failure agent is determined to be configured to accurately detect operational conditions associated with onset of an equipment failure, activating the learning agent training module; wherein:
   said activating includes:
      i) if the one or more monitoring sensors of the at least one unit of equipment not included in the second target set of equipment comprises a subset of sensors of the second target set of equipment, using the failure agent to monitor data included within the received monitored sensor signals produced by the one or more monitoring sensors of the at least one unit of equipment not included in the second target set of equipment; and
      ii) if the one or more monitoring sensors of the at least one unit of equipment not included in the second target set of equipment comprises at least one more sensor than units of equipment in the second target set of equipment, retraining the failure agent for the at least one unit of equipment not included in the second target set of equipment using default parameters from the failure agent, and flatlined past history for the at least one more sensor; and
   said monitoring includes detecting, from patterns or relationships within the data included within the received monitored sensor signals produced by the one or more monitoring sensors of the at least one unit of equipment not included in the second target set of equipment, an operational condition identifying an equipment failure onset of the at least one unit of equipment not included in the second target set of equipment and thereby enable prediction of failure of the at least one unit of equipment not included in the second target set of equipment in the failure mode.

In another aspect the disclosure pertains to a plant asset failure prediction system comprising:
a memory, a user interface, a database, a network interface and processor coupled to the memory and configured to work in conjunction with one or more monitored units of plant equipment configured with one or more monitoring sensors, wherein the user interface is configured to receive user input identifying a first target set of equipment being a first plurality of units of equipment, wherein each equipment unit of the first plurality of units of equipment is characterised by a first plurality of matching target parameters and wherein the one or more monitored units of plant equipment configured with the one or more monitoring sensors includes at least one unit of equipment not included in the first target set of equipment;
wherein the network interface is configured to receive sensor data from sensors associated with the first plurality of units of equipment;
wherein the database is configured to store failure signatures contained in the received sensor data;
wherein the processor is configured to operate a learning agent training module on the received sensor data to train a failure agent to learn to detect operational conditions associated with onset of an equipment failure by identifying patterns or relationships within the sensor data by learning to discriminate between normal baseline data for the first target set of equipment and a training set of failure signatures for the target set of equipment; wherein the normal baseline data of the first target set of equipment is derived from a portion of the sensor data associated with operation of the first plurality of units of equipment in a normal mode and wherein the training set of failure signatures is derived from a portion of the sensor data associated with operation of the first plurality of units of equipment in a failure mode;
wherein the processor is further configured to determine for the first target set of equipment whether the failure agent is configured to accurately detect operational conditions associated with onset of an equipment failure to discriminate between the normal baseline data and the training set of failure signatures for the target set of equipment by testing the failure agent on example failures of a validation set of failure signatures selected from sensor data associated with operation of the first plurality of units of equipment in the failure mode;
receive monitored sensor signals produced by one or more monitoring sensors of the at least one unit of equipment not included in the first target set of equipment; and
if the failure agent is determined to be configured to accurately detect operational conditions associated with onset of an equipment failure, activate, by the processor, the learning agent training module; wherein:
   said activating includes:
      i) if the one or more monitoring sensors comprises a subset of sensors of the first target set of equipment, using the failure agent to monitor data included within the received monitored sensor signals; or
      ii) if the one or more monitoring sensors comprises at least one more sensor than units of equipment in the first target set of equipment, retraining the failure agent for the at least one unit of equipment not included in the first target set of equipment using default parameters from the failure agent, and flatlined past history for the at least one more sensor; and
said monitoring includes detecting, from patterns or relationships within the data included within the received monitored sensor signals, an operational condition identifying an equipment failure onset of the at least one unit of equipment and thereby enable prediction of failure of the at least one unit of equipment in the failure mode.

### BRIEF DESCRIPTION OF THE DRAWINGS

The invention described in the present disclosure will be more fully appreciated in connection with the following detailed description taken in conjunction with the accompanying drawings, wherein:
FIGS. 1A and IB depict conceptual systems intended to illustrate principles of transfer learning in accordance with the present disclosure.
FIGS. 2A and 2B are diagrams showing a manner in which a sensor template is created for a collection of equipment.
FIG. 3 illustrates a block diagram of an exemplary system for performing asset failure detection using transfer learning in accordance with the disclosure.
FIG. 4 is an exemplary block diagram of an asset failure detection system for performing asset failure detection in the system of FIG. 3.
FIG. 5 illustrates various functional modules included within a failure signature recognition component.
FIGS. 6A-6J show user interface screens displayed by a user interface module of an asset failure detection system.
FIG. 7 illustrates an exemplary process for performing failure signature recognition training.
FIG. 8 illustrates a failure space depicting four types of results that a failure agent may experience.
FIG. 9 is a process flow diagram illustrating an adaptive taxonomy-based transfer learning procedure in accordance with the present disclosure.
FIG. 10 illustrates a process for transfer learning based upon a global equipment taxonomy.
FIGS. 11-28 illustrate methods for population-based learning with deep belief networks in accordance with the present disclosure.

### DETAILED DESCRIPTION

### Introduction to Transfer Learning

The present disclosure describes systems and methods for improving the reliability of industrial and other equipment by substantially reducing the incidence of failure in such equipment through effectively "learning" the operational and other conditions associated with equipment failure. This enables such failure to be averted upon detection of the onset of such conditions. In one embodiment this is achieved by evaluating data from, for example, sensors associated with such equipment in order to identify patterns or relationships within the sensor data associated with equipment failure. Such patterns or relationships, which may be referred to hereinafter as "failure signatures", may be stored within a failure signature library and made available to population of similar equipment along with baseline operating data. In this regard "similar" may be defined in terms of a collection of hierarchical sets, each defining broader degrees of similarity, based on a central equipment taxonomy. The taxonomy provides a sort of classification or "genome" for industrial equipment including information about operating context (i.e. offshore drilling rig -> pump, or equipment type -> centrifugal pump), make & model (i.e. Siemens SIMOTICS HV).

In one embodiment a global taxonomy of equipment broken down by equipment type, industry, make & model, and operating context is established. The taxonomy may be represented by a graph, with nodes in the graph representing sets of equipment sharing certain characteristics; that is, the taxonomy may be represented by a graph structure for defining set membership as opposed to strict hierarchy.

This adaptive system learns where transfer learning applies; in other words, it empirically learns what equipment (in what context) have characteristics similar enough to support transference of signatures and operating states from other equipment. It does this empirically, by taking the global repository of signatures and testing them on new instances of the equipment class, to see if there are too many false positives (i.e., if the existing signatures apply to the new instance or not). When installed at a subscriber site, in one embodiment all assets to be monitored are first linked to a global equipment taxonomy. This enables each asset to be mapped to, for example, a Make-Model-Revision key, and a set of OpContext (Operating Context) keys. These keys may then be used to determine set membership for the library of known failure signatures.

### Derivation of Equipment Signatures Using Captured Sensor Data

In one embodiment each asset to be monitored is outfitted with a collection of sensors configured to provide data concerning operational and state characteristics of the applicable asset. The transfer learning techniques described herein will generally be most effective when member assets among which information and intelligence is to be effectively transferred are associated with similar numbers and types of sensors. However, the correspondence between the sensors associated with different assets need not be exact, and methods will be described for addressing instances in which member assets are "missing" sensors or include "extra" sensors.

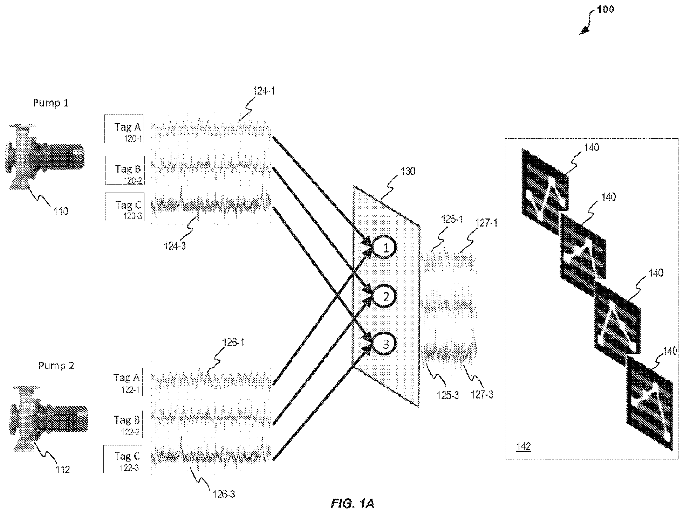

Turning now to FIG. 1A, there is shown a diagram of a conceptual system 100 intended to illustrate principles of transfer learning in accordance with the present disclosure. As shown, the system includes units of equipment, i.e., a centrifugal pump asset 110 and a centrifugal pump asset 112 comprising equipment instances to be monitored. A first collection of sensors 120 is associated with the pump asset 110 and a second collection of sensors 122 is associated with the second pump asset 112. Each of the sensors 120 and 122 produces data in the form of a time series waveform indicative of some aspect of the operation or state of asset 110 or asset 112. The time series waveforms 124 produced by the sensors 120 over some period of time may define a "signature" 125 representative of the state and/or operation of the asset 110 during this time. Similarly, time series waveforms 126 produced by the sensors 122 over some period of time may define a signature 127 representative the state and/or operation of the asset 112 during the time period. A sensor template 130 is defined to standardize the sensor profile of inputs for transfer learning. In the embodiment of FIG. 1A, the sensor template 130 indicates that that the "raw" data values produced by each sensor 120 and 122 specified by the template 130 should be received and processed. The sensor template 130 may be specific to a particular make/model of the pump asset 110 and the pump asset 112 (e.g., make XYZ, model A).

During operation of the system 100, signatures 125 defined by the data collected from the sensors 120 over configurable time windows, i.e., prediction intervals, are compared with known "failure signatures" 140 maintained within a library 142 of known failure signatures in order to predict or otherwise determine when failure of the asset 110 is likely to occur. The library 142 of known failure signatures may be developed based upon sensor data collected from a large number of assets similar or identical to the assets 110 and 112 in the manner described hereinafter. The signatures 127 defined by the data collected from the sensors 122 may be similarly compared with the known failure signatures 140 in order to predict or otherwise determine when failure of the asset 112 is likely to occur. In this way knowledge relating to potential failure scenarios is effectively transferred to the assets 110 and 112 (or to the applicable control system) through comparison of the signatures 125. 127 developed by the sensors 120 and 122 to the known failure signatures 140.

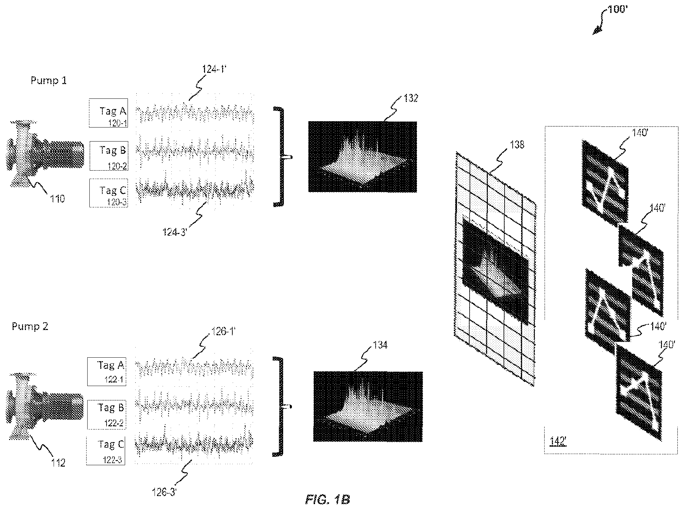

Attention is now directed to FIG. 1B, which depicts a diagram of a conceptual system 100' for effecting transfer learning among equipment assets in a manner similar to that described with reference to the system 100 of FIG. 1A. However, in the system 100' the signatures of the assets 110 and 120 being monitored are developed not only from the time series waveforms 124', 126' produced by the sensors 120 and 122, but also from derived inputs generated on the basis of such waveforms 124', 126'. Specifically, a first collection of derived inputs 132 is generated by processing the time series waveforms 124' from the sensors 120 and a second collection of derived inputs 134 is generated by processing the time series waveforms 126' from sensors122. A sensor template 138 identifies the raw data values produced by each sensor 120 and 122 and/or the first and second collections of derived inputs 132 and 134 that are to be received and utilized as described hereinafter. In one embodiment the sensor template 138 comprises an N-dimensional sensor template linked to the make/model and operational context (OpContext) of the pump assets 110, 112.

In one embodiment the first and second collections of derived inputs 132 and 134 are calculated by applying signal processing algorithms to the streams of raw data values produced by each sensor 120 and 122. Such signal processing may include, for example, calculating power spectrum (frequency components extracted via Discrete Fourier Transform) for each sensor 120 and 122; first derivative (rate of change), and second derivative (rate of rate of change), aggregates, memory interval, and multi-resolution windows. In this way salient features concerning each stream of sensor data are captured prior to invoking machine learning agents in the manner discussed below. The aggregates calculated for each stream of sensor data values (for each sample interval) may include, for example, average, maximum, minimum, and standard deviation. For example, if sampling of the sensors 120 and 122 is occurring at 1-minute intervals, then the instantaneous sample value (i.e., current sensor value) is captured each minute. In addition, aggregate values are extracted across the interval. In this way higher-resolution features are also captured. For example, in the case in which sensor values are oscillating rapidly, the standard deviation will increase and be captured as an aggregate.

In one embodiment the power spectrum aggregate is calculated in the following manner. First, a Fast Fourier Transform is applied and followed by a band pass filtering operation in order to restrict frequency range. The Window Length used in the FFT calculation is configurable, based on the sampling resolution. For example, if the solution is configured to sample data at a 1 second interval, with Window Length N = 60, a resulting array from the FFT of length N/2 = 30 is produced, with each array item representing the intensity of the frequency at that position. The elements of this array are then compressed into 10 (logarithmically) spaced bins; that is, the 60 samples in the time domain are reduced to 30 bins in the frequency domain, which are then summed in 10 items in logarithmic scale. Thus, in this example the original quantity of data is reduced by a factor of 6.

In one embodiment, the following derived features are calculated for each tag of each sensor:
1. First Derivative
2. Second Derivative
3. Power Spectrum - array of 10 frequency bins (on logarithmic scale) for each sensor/tag
   a. Frequency [10] - each bin contains intensity for that frequency band
4. Aggregates - calculated based on sampling interval
   a. Average
   b. Minimum
   c. Maximum
   d. Standard Deviation
5. Memory Window - incorporate window to include past sensor data along with present, exposing event sequence signatures
6. Multi-Resolution Window - incorporate narrow window of high resolution data, along with wider window of low resolution data. For example, for each time step, would include a 60-second window of second data, a 24-hour window of minute data, and a 30-day window of hourly data.

Thus, for each time step, for each tag, in addition to the sample (current) value of the tag, following derived inputs are also calculated:
- Derivative (scalar)
- Second Derivative (scalar)
- Power Spectrum (vector of length 10)
- Aggregates (vector of length 4)
- Memory (vector of configurable length)
- Multi-Resolution Window (vector of configurable length)

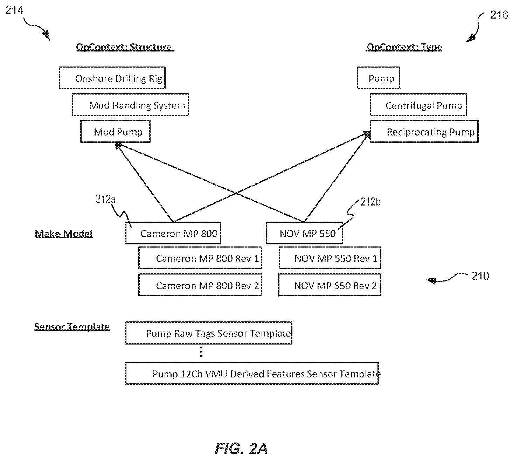

FIG. 2A depicts an exemplary linkage and relationship between sensor templates and equipment taxonomy. In one embodiment a sensor template is created for a collection of equipment 210 to have one or more of the characteristics described above in order to provide structured metadata around the sensor profile for assets 212 in the collection 210. As shown, in FIG. 2A, functionally similar equipment assets 212a and 212b of differing make/model may be linked to the same structure and type of operational context. For example, in FIG. 2A the different mud pumps 212a and 212b are each associated with an OpContext structure 214 of "Mud Pump" and an OpContext type 216 of "Reciprocating Pump".

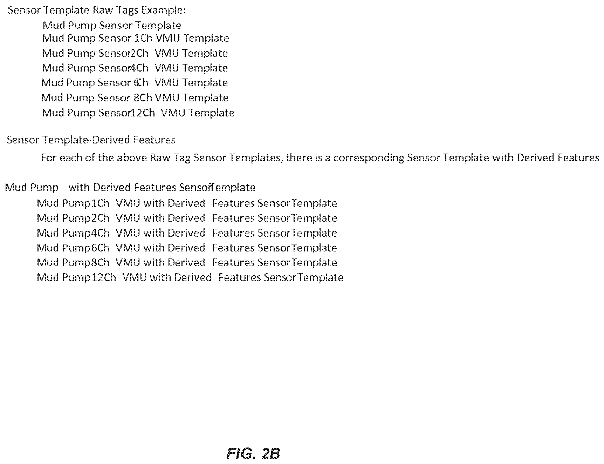

FIG. 2B lists various types of sensor templates which could be developed for use with the collection of equipment 210. In one embodiment the sensor templates may define tags for "raw" sensor data for each permutation of taxonomy and sensor configuration found in the equipment installations. Typically each make/model of equipment supports a standard set of sensor placements. That being said, sensing devices such as vibration monitoring units (VMUs) are an exception, as each is typically acquired and installed separately from the base equipment asset being monitored. A VMU may typically be used in connection with any equipment disposed to rotate during operation. Thus, different sensor templates may be developed for each equipment units for the cases in which a VMU installed and otherwise. In one embodiment a different sensor template is developed for each permutation of the number of channels associated with a particular sensor and, for each permutation, a separate version of the template is developed to accommodate a VMU.

### Specific Implementation of Asset Failure Detection System Using Transfer Learning

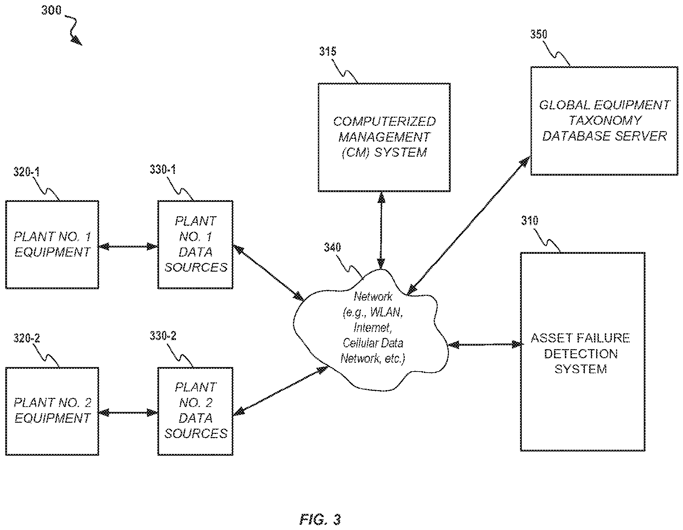

Attention is now directed to FIG. 3, which illustrates a block diagram of an exemplary system 300 for performing asset failure detection using transfer learning in accordance with the disclosure. The system 300 includes an asset failure detection system 310, a computerized management (CM) system (also known as a computerized maintenance management system or CMMS), a first plant 320-1 with equipment coupled to first plant data sources 330-1, a second plant 320-2 with equipment coupled to second plant data sources 330-2, a global equipment taxonomy database server 350 and a communication network (e.g., the Internet, a WLAN, a cellular data network or other communication network) communicatively coupling the other components of the system 300.

The asset failure detection system 310 is configured to receive sensor data from the first and second plant data sources 330-1 and 330-2. The asset failure detection system also receives notifications of equipment failures (e.g., work order histories, etc.) from the CM system 315. The failure notifications from the CM system 315 include indications of the types of failures, dates of failures, and failure codes. Using methods described below, the asset failure detection system 310 analyzes the sensor data received from the first and second plant data sources 330-1 and 330-2 in view of the equipment failure notifications received from the CM system 315 in order to develop learning agents to perform the failure signature recognition and anomaly detection methods described below. The CM system 315 is similar to systems described in commonly owned and assigned U.S. Patent Appl. No. 11/740,404, Attorney Docket No. MTEL-001/00US 316497-2001, entitled "System and Methods for the Universal Integration of Plant Floor Assets and a Computerized Management System," which is incorporated in its entirety for all purposes. The failure signatures identified through these methods may be communicated to the global equipment taxonomy database server 350 for distribution to other failure detection systems associated with plant assets similar or identical to the plants 320 in order to facilitate the identification of potential failure scenarios involving such assets. In addition, failure signature information provided by the database server 350 may be received by the asset failure detection system 310 and used during operation of the plant equipment 320 in order to identify circumstances in which the equipment 320 may be likely to fail.

The first and second plants 320-1 and 320-2 each include various plant equipment that is monitored by various sensors in the plant data sources 330-1 and 330-2 respectively. The first and second plant data sources each include a plant historian system (not shown) that stores Tag information related to sensors in the plant data sources 330.

For each plant 320, the CM system 315 stores data indicative of equipment hierarchy, equipment type (e.g., metadata defining equipment type, e.g., a centrifugal pump versus a non-centrifugal pump, but no Tag information) and work order histories for the plant equipment in the plants 320.

The asset failure detections system 315 enumerates Tags from the plant historian and matches these to the equipment types and hierarchy stored in the CM system 315. This enables multiple equipment of similar types to contribute to the failure history analysis performed at the asset failure detection system 315.

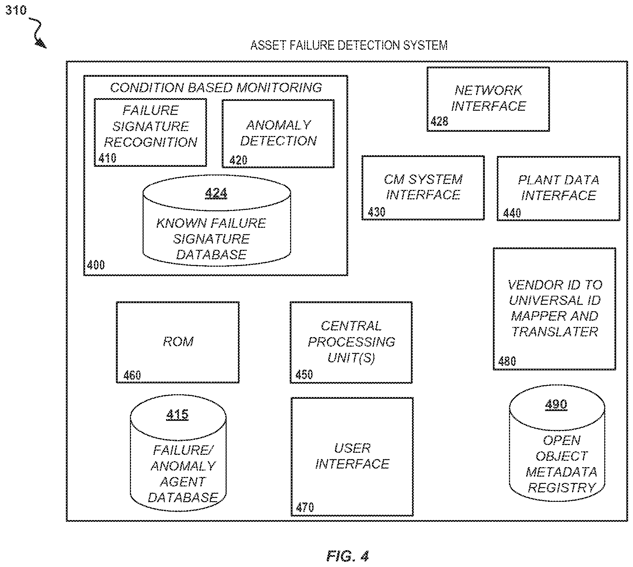

Referring to FIG. 4, an exemplary block diagram of an asset failure detection system 310 for performing asset failure detection in the system of FIG. 3 is shown. The asset failure detection system 310 can be a computer server or servers. The asset failure detection system 310 includes a condition based monitoring (CBM) subsystem 400 that includes a failure signature recognition component 410, an anomaly detection component 420 and a known failure signature database 424.

The CBM system 400 is communicatively coupled to a plant data interface 440 which is in turn connected to the network 340 and to the plant data sources 320. This connection to the plant data sources 330 allows importation of sensor data from plant historians at the plant data sources 330. The sensor data is used to train learning agents for the failure signature recognition component 410 and the anomaly detection component 420. Information defining or referencing failure signatures recognized by the component 410 may be stored within the known failure signature database 424. In addition, the database 424 may store information defining or referencing failure signatures received from the global equipment taxonomy database server 350, such failure signatures having been derived from sensor data and/or aggregates associated with plant equipment similar or identical to the plants 320.

The CBM subsystem 400 is also communicatively coupled to a CM system interface 430 that is connected to the network 340 and to the CM system 315. As is described below, the CBM subsystem 400 imports work order histories from the CM system 315 to use as part of the failure agent training for the failure signature recognition component 410 and anomaly agent training for the anomaly detection component 420. The failure and anomaly agents are stored in a failure agent and anomaly agent database 415 that includes one or more types of storage medium. The CBM subsystem 400 also manages changes in the plant equipment by monitoring the work order histories from the CM system 315 and the TAG identifiers associated with sensors of the plant data sources 330. In this way the CBM subsystem 400 is made aware of new equipment installed at the plant equipment sites 320. The CBM system 400 communicates new tag and equipment identifiers to a vendor ID to universal ID mapper and translator 480 (referred to herein as the ID mapper 480) which maps vendor IDs to universal IDs and stores these mappings in an open object metadata registry 490. The condition based monitoring system 400 continually polls the CM system 315 and plant data sources 330 for new data, new tags and new equipment. In one embodiment, the CBM subsystem 499 communicates with the plant data sources 330 and the CM system 315 using the Mimosa protocol.

The asset failure detection system 310 also includes one or more central processing units (CPUs) 450, a ROM (or Flash ROM or EEPROM) storage medium 460 for storing program code for execution by the one or more CPUs 450 to perform the processes described herein. A user interface module 470 is configured to output graphical user interfaces to display devices and receive input from input mechanisms of computing devices using the asset failure detection system 310. In one embodiment the user interface includes a touch-sensitive display.

The failure signature recognition component 410 uses pattern recognition techniques to learn when failures are about to occur. The failure signature recognition component identifies fault conditions in the work order histories of the CM system 310, takes the sensor data from the plant data sources and learns failure signatures based on the sensor data.

The anomaly detection component 420 is a forward looking analysis that pulls in past data and builds a multivariate model as to what is normal. For example, the anomaly detections component 420 can look at temperature and pressure time histories and identify abnormal measurements based on trained learning agents. The anomaly detection component 420 can use machine learning as one approach for training. The learning agents of the anomaly detection component are trained to identify an anomaly in the sensor data before a failure occurs. If an anomaly is detected, the affected equipment can be shut down and inspected to identify what may be causing the anomaly before a catastrophic failure occurs.

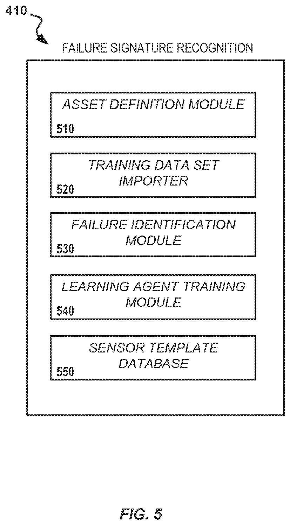

The failure signature recognition component 410 is made up of various functional modules as shown in FIG. 5. The functional modules in FIG. 5 are exemplary only and other embodiments can divide the functions differently. The functional modules of FIG. 3 include an asset definition module 510, a training set data importer 520, a failure identification module 530, a learning agent training module 540 and a sensor template database 550. The functions performed by these functional modules will be described in reference to the methods described herein.

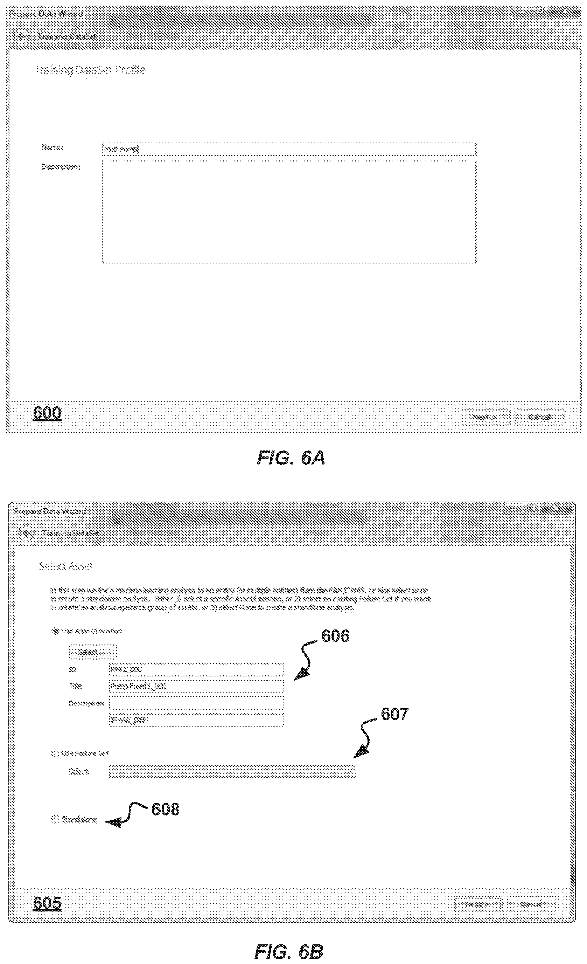

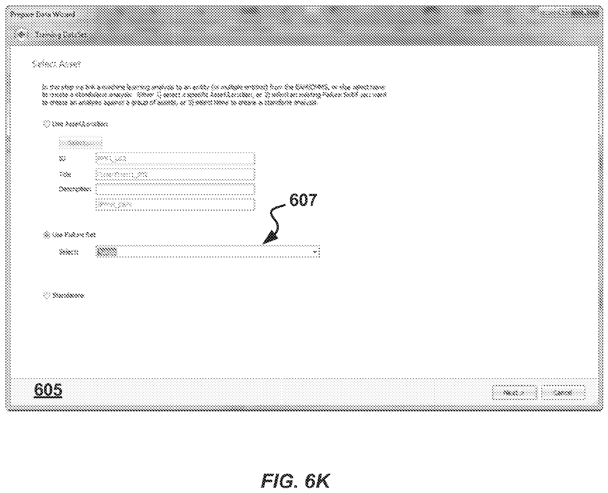

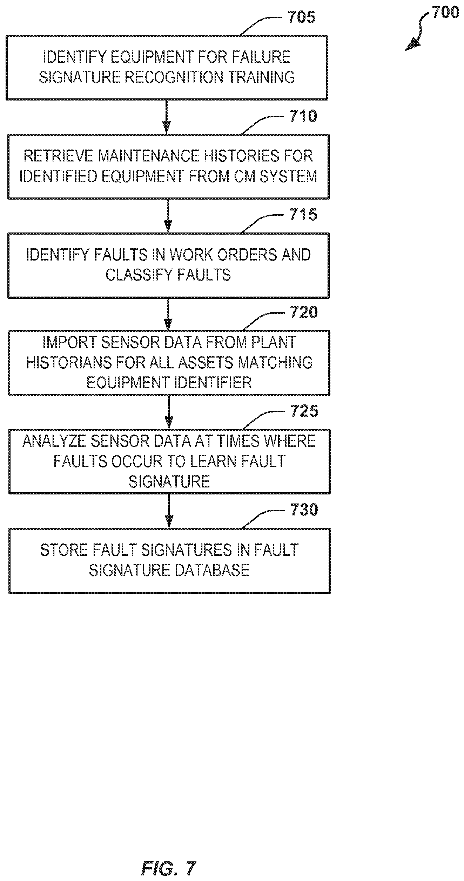

Referring to FIG. 7, a process 700 for performing failure signature recognition training includes the stages shown. In reference to FIG. 7 with further reference to FIGS. 4 and 5, the process 700 begins at stage 705 where the asset definition module 510 receives an input identifying a piece of equipment for which failure signature recognition training is to begin. FIG. 6A shows a user interface screen 600 displayed by the user interface module 470 which a user can indicate a name of a piece of equipment. In FIG. 6A, the user has input the name "mud pump" into a name field. Upon entering the name "mud pump" into the name field, the user interface 270 renders a user interface screen 605 illustrated in FIG. 6B. The user interface screen 605 provides the user with three options for selecting an asset: (1) selecting a single asset 606 at a location; (2) select an existing Failure Set 607 if the user wants to create an analysis against a group of assets; and (3) select none to create a standalone analysis 608. In this example, the user enters an ID number identifying the specific pump at a specific location to be analyzed.

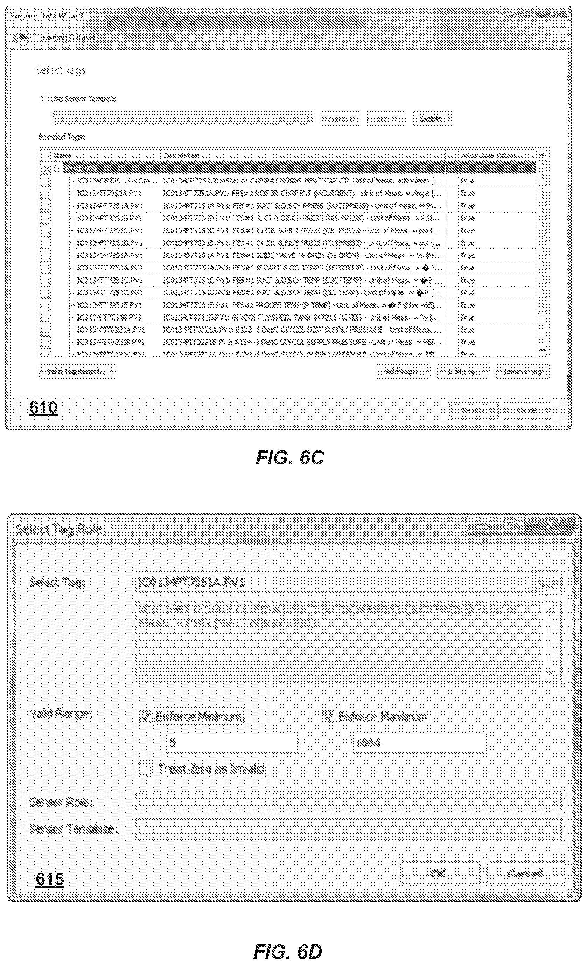

After the user selects the one or more assets (or no asset in the case of a standalone analysis), the user interface displays a user interface screen 610 as shown in FIG. 6C. The user can select from a list of tags listed in a tag data store shown in the screen 610. Each tag corresponds to a sensor associated with the pump selected with the screen 605 in this example. A sensor could be associated with an operating parameter of the pump such as pressure or temperature. For each tag in the screen 610, the user is provided with a screen 615 shown in FIG. 6D. The screen 615 allows the user to set outlier removal settings (minimum and maximum) to remove spurious data. If the received sensor data is outside of the minimum and maximum values input by the user, the sensor data is removed from the training data set.

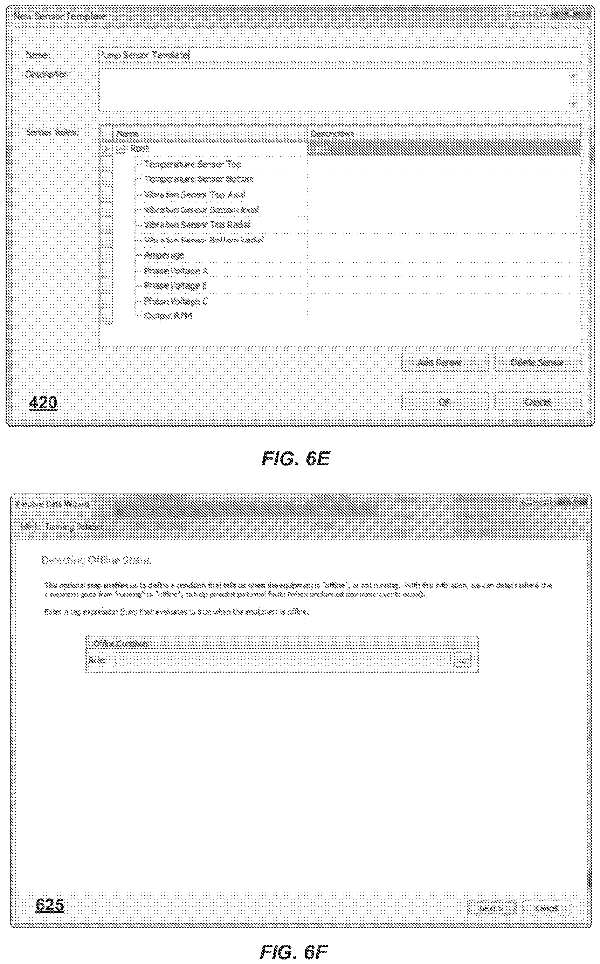

Upon setting all the outlier setting on the screen 615, the user interface 270 renders a user interface screen 620 shown in FIG. 6E. The screen 620 is used to create a sensor template for the chosen asset (the pump). Similar assets have similar sensors and can use the same template. Sensor templates are stored in the sensor template database 550. Different assets could have a subset of the sensors listed on the sensor template. This embodiment uses similar assets to gather profile data for a population and learn from the population data. The sensor template is a framework, but the user customizes the templates. One user's piece of equipment will have different sensor, potentially, than another user's similar piece of equipment. The user can customize the templates such that specific sensors are mapped to the specific tags on a specific piece of equipment.

After completing the sensor template in screen 620, the user interface module 470 renders the user interface screen 625 shown in FIG. 6F. With screen 625, the user is asked to input a rule to detect offline status (e.g., based on amperage or a current flow). The offline status could be an indication of a potential failure. When an asset is detected as being offline, the sensor data is not used for failure signature recognition or anomaly detection. This completes the identification of the equipment at stage 705.

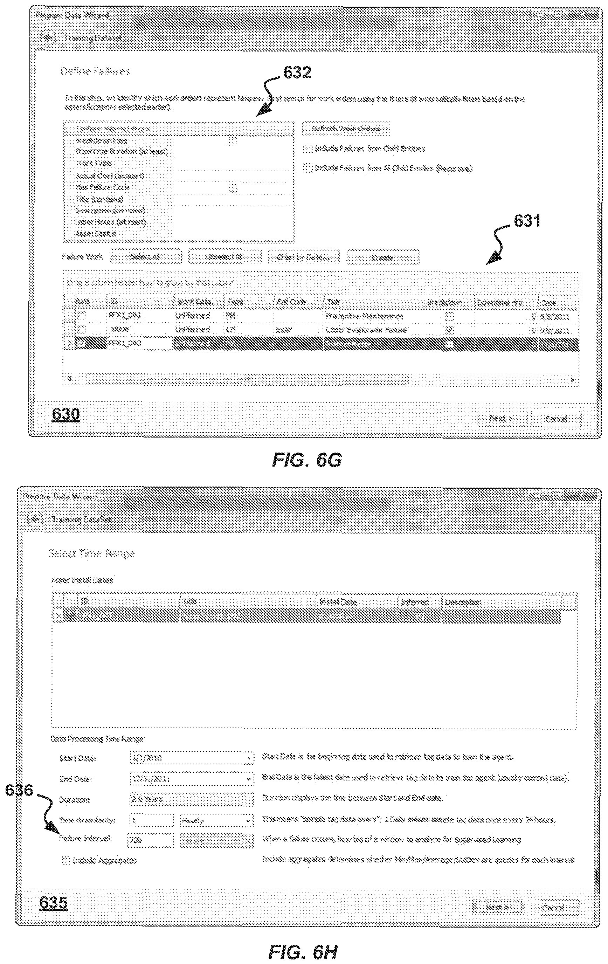

At stage 710, the failure identification module 530 retrieves maintenance histories that have been previously obtained from the CM system 315. The failure identification module 530 provides a screen 630 shown in FIG. 6G, via the user interface module 470, that allows a user to identify failures from maintenance work order history for the selected asset/location, that have been previously received from the CM system 315, from a downtime tracking system, or other 3rd party failure database or spreadsheet. The user can use various filters to help pinpoint which work orders represent failures. Screen 630 shows the failures defined for an asset. The output of this step is to identify a failure condition. The table 631 in the user interface screen 630 includes a date to identify when failure events have occurred. The work orders received from the CM system 315 include the date and a failure code which identifies a failure such as a bearing failure, motor failure etc. The work order maintenance history is enumerated automatically. The heuristics 632 at the top of screen 630 includes ways to allow a user to identify work orders that include certain characteristics. A user can identify failures automatically using this method, but a user can also choose failures manually.

If the user does not have historical work orders for the asset, they can use the "offline status" feature to find past failures. By visualizing past offline conditions, the user can identify unplanned outages, and create a "virtual work order" in the asset failure detection system 310 to identify the failure event which was not properly documented in the CM system 315.

After identifying the failures at stage 715, the process 700 continues at stage 720 where training data set importer module 520 retrieves a set of training data comprising sensor data and related aggregates corresponding to all the tags identified at stage 705 that exhibit changes during the identified failures for the selected asset. The training data is filtered to remove outlier data, data when the asset is offline etc.

At stage 720, the training set data importer module 520 displays screen 635 shown in FIG. 6H which allows the user to identify a set of training data to import. The training data can include data and related aggregates for any sensor that exhibits a change in condition (i.e., a change in sensor data values or related aggregates) at, or within a selected time period preceding, the time of the identified failure. A user can choose to include as much data as is available, or a user can choose to leave out certain times. The failure interval 636 (720 hours) shown in screen 635 allows a user to break the data into blocks for analysis. Once the time frame data is chosen, the user can choose to import the data to be analyzed.

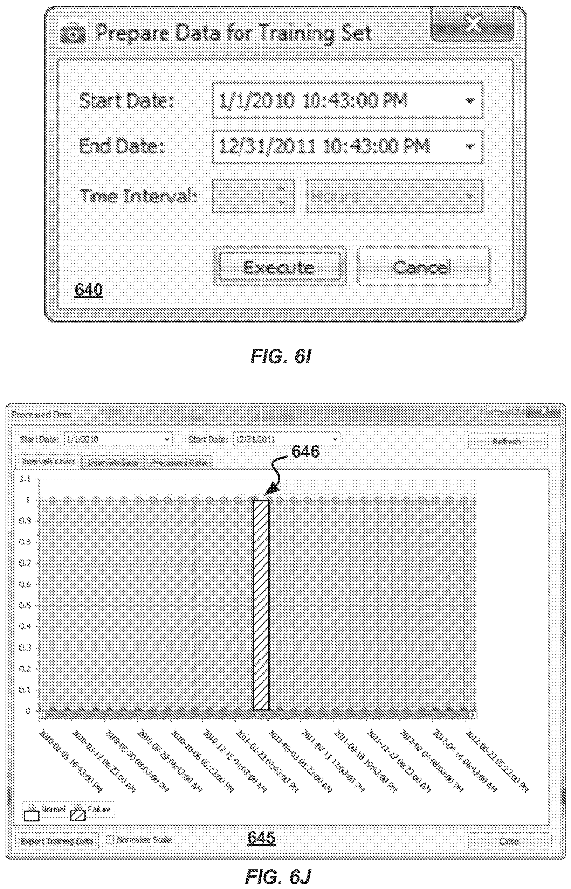

After the user inputs the data identifying which training data to import using the screen 635, the training data set importer module 520 displays a screen 640 shown in FIG. 6I which allows the user to verify the data to be imported. After the user selects to execute the import of the training data with the screen 640, the training data set importer module 520 displays a screen 645, as shown in FIG. 6J, that shows sensor data for normal conditions both before and after a portion 646 of training data that includes the identified failure. The procedures at stages 705, 710, 714 and 720 are repeated for many tags and many pieces of equipment matching the selected asset type until a large amount of data covering a long period of time for a large number of tags for each machine is obtained.

At stage 720, data for all selected tags, as well as all selected failures is imported by the training data set importer module 520 and stored in optimized format for machine learning. Data Interpolation can be used to fill in missing tag data. The imported data is stored with metadata to flag which intervals are failure intervals versus normal intervals. The time interval leading up to failure for which data is most important is configurable based on a "prediction interval" specified for the Training Dataset (i.e. 30 days).

The user-specified "prediction interval" is a hint to the system as to a starting point for the learning algorithm employed at stage 725. The learning algorithm automatically tunes the prediction interval by evaluating multiple interval durations, and selecting the one with the highest predictive accuracy for the past failure signatures.

At stage 725, the learning agent training module 540 analyzes the sensor data and related aggregates at times leading up to and during the identified failures. The signature of a failure is a characteristic pattern of sensor readings, changes in aggregates, oscillations, some changing variable, etc. By identifying when a failure occurs for a given asset, the sensor data and related aggregates leading up to the failure and during the failure can be identified. Importing the sensor data and related aggregates leading up to and including a failure condition allows the failure signature recognition system to identify what leads up to the failure condition, not just the failure condition.

At stage 725, one or more failure agents are created and trained using the imported training data set. Machine learning techniques such as Resilient Back Propagation (RPROP), Logistic Regression (LR), and Support Vector machines (SVM) can all be used at stage 725. RPROP can be used for certain non-linear patterns, LR enables ranking of tag prediction rank, and SVM enables confidence intervals for predictions.

If multiple failures were identified in the training data set, separate failure agents can be trained for each fault. For example, one might be trained on a bearing failure, and another on a motor failure, which might have different signatures.

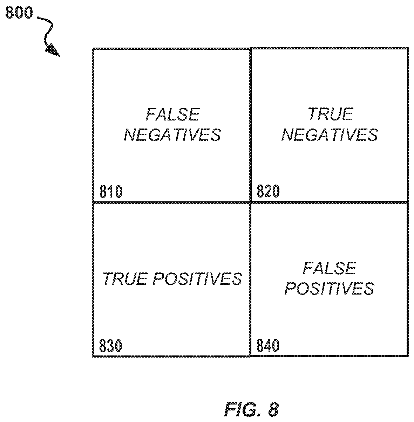

The training at stage 725 involves creating a failure agent that takes in the sensor data and related aggregates in the training set and, using machine learning, parameters of the failure agent are adjusted such that the failure agent successfully predicts the identified failures before the failures occur. The training at stage 725 can use a tuning methodology to avoid certain types of failures. FIG. 8 illustrates a failure space 800 illustrating the four types of results that a failure agent can experience. There are two types of successful predictions including a true negative 820 and a true positive 830. There are also two types of errors, type 1 is a false positive 840 and type 2 is a false negative 810. Type 2 errors can be catastrophic whereas type 1 errors can mean a little down time, but no loss of life. For example, the Deep Water Horizon oil rig disaster was a type 2 failure. Because of the difference in the result of type 1 and type 2 failures, the training at stage 725 can be biased to avoid one type of error more than the other. For example, a user could weigh type 2 failures twice as much as type 1 failures for equipment where a false negative can be catastrophic such as an oil rig. In contrast, if type 2 failures do not result in loss of life, a user could weigh the type 1 failures to be more important.

At stage 725, the user can configure the weightings if they do not agree with the numbers of each type of failure that occur for the training data set. The failure agent can be retrained after each new failure. The failure agent looks at all the sensor data brought in for each piece of equipment. The failure signature recognition training at stage 725 can be accomplished with one sensor measurement and one failure or with hundreds of sensor measurements and hundreds of failures. Data from hundreds of pieces of equipment can help but are not necessary for adequate training at stage 725.

In some cases where prediction models have already been trained, the transfer learning techniques described herein are used to set default parameters for a starting point for training a new system. This saves time in developing the failure recognition agents for new systems. The learning agent training module 540 uses a failure agent that was trained for old equipment with more sensors than a new pump. In other words, the new pump has a subset of the sensors for an old type of pump. One puts flat line measurements for new sensors into an old agent and retrains the old agent by importing the new sensor data. For example, if you have a failure agent trained for two sensors and you add a new sensor, the learning agent training module 540 retrains the old failure agent based on the new sensor data using flat lined past history for the new sensor. In other words, the learning agent training module 540 starts with the signature from the prior pump and recalibrates the old failure agent using the old signature and the new sensor data.

After the learning agent training module 540 has finished training the failure agent at stage 725, the process 700 continues at stage 730 where the learning agent training module stores the failure agent in the failure/anomaly agent database 415. The process 700 is exemplary only and modifications to the process can be made without departing from the scope of the methods described herein. For example, stages may be omitted, added or rearranged.

### Adaptive Taxonomy-Based Transfer Learning

In one embodiment the transfer learning techniques described herein are performed with respect to collections of equipment linked to a global equipment taxonomy maintained within database server 350. When a new signature is learned for an instance of an asset linked to the taxonomy, a process will check if the signature can be transferred to other "similar" assets, at different levels of the taxonomical hierarchy.

Attention is now directed to a specific example. Consider the case in which a centrifugal pump ("Pump A") associated with 10 tags linked to the equipment taxonomy for: a) Eq Type: centrifugal pumps, b) make-model: Triplex Mud Pump BK-1600, and c) OpContext (structure) - drilling mud pump; which is linked to the appropriate sensor template (10 tags and derived features, i.e., aggregates).

Upon evaluating the sensor information and aggregates described above, assume that a failure signature corresponding to a past failure for Pump A is identified or otherwise "learned". At this point it is desired to determine how many other pumps or pump types could benefit from becoming aware of the learned signature. A service performs may perform this check automatically by first trying to propagate the failure signature to pumps identical or very similar to Pump A; that is, by attempting to propagate the signature throughout the lowest level of the taxonomy (most restrictive set membership). For example, the lowest level of the taxonomy could correspond to a set of pumps having the same sensor template structure, equipment type, make-model, and OpContext.

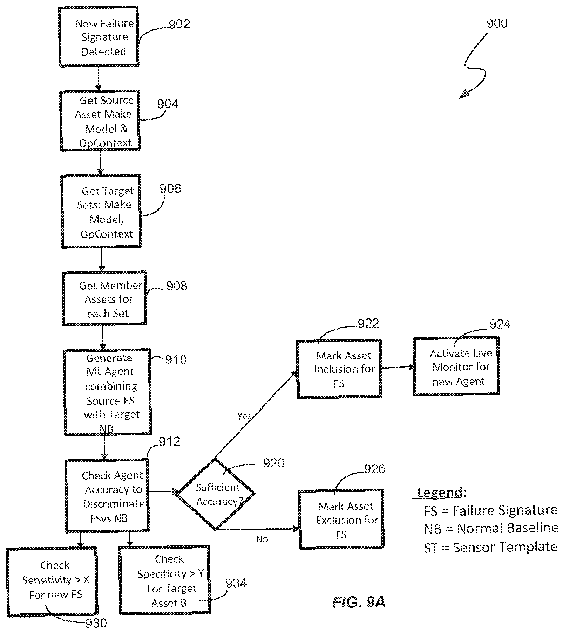

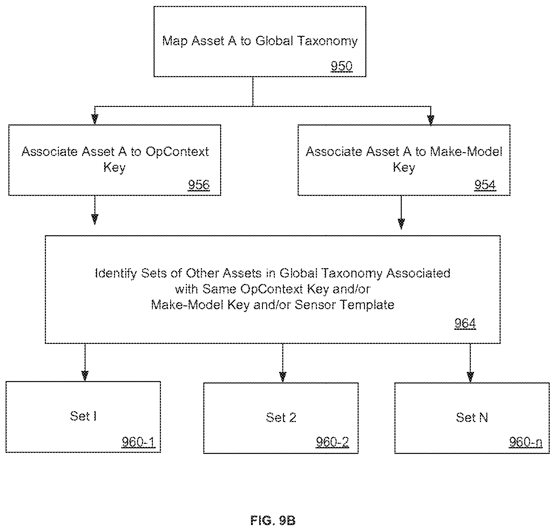

Attention is now directed to FIGS. 9A and 9B, which are flow diagrams illustrating an adaptive taxonomy-based transfer learning procedure that could be performed by such an automatic service. As shown in FIG.9A, a new failure signature is detected on a source asset, hereinafter referred to as Asset A (stage 902). An OpContext and Make-Model information is then obtained for Asset A (stage 904). As shown in FIG. 9B, during an initial installation it is assumed that Asset A has been mapped to a global equipment taxonomy (stage 950) and associated with a make-model key (stage 954) and a standard OpContext key (stage 956). These keys are used to perform a lookup into a global equipment library in order to identify a number of target sets 960, where each target set is defined as follows (stage 964):
- Set 1 - all other assets of same Make-Model-Rev, and OpContext Leaf node; with matching Sensor Templates (10 raw sensors of same type and sequence, with all standard derived inputs)
- Set 2 - all other assets of same Make-Model, and OpContext Leaf node ; with matching Sensor Templates
- Set 3 - all other assets of same Make-Model ; with matching Sensor Templates
- Set 4 - all other assets of same OpContext Leaf Node; with matching Sensor Templates
- Set 5 - all other assets of same OpContext Leaf Node Parent; with matching Sensor Templates
Referring again to FIG. 9A, once these target sets have been identified and the relevant data obtained (stage 906), member assets are determined for each target set (stage 908). A new machine learning ("ML") agent (or simply "Agent") is then generated for each member asset of the collection and the normal baseline data from the target asset and the failure signature data from Asset A are acquired (stage 910). It is then determined whether this acquired data may be used to train a classifier to discriminate between normal and failure data (stage 912). For each asset, if the accuracy of the Agent for the new failure signature is sufficiently high (stage 920), then the asset is marked (for tracking purposes) as being linked to the failure signature (stage 922) and the Agent is activated for online monitoring of the target asset (stage 924). For assets where the accuracy is not sufficiently high (stage 920), the Agent is discarded and the asset identifier is marked as being excluded with respect to the failure signature (stage 926). In one embodiment the determination of whether the classifier may be configured to discriminate between data associated with normal operation and failure data (stage 912) involves comparing the sensitivity relative to the new failure signature to a configurable threshold (e.g., 75%) (stage 930). The specificity for a target Asset B may also be compared to a configurable threshold (e.g., 75%), where the failure signature from Asset A has its sensor data re-scaled based on the scaling parameters for Asset B (stage 934).

In other words, an initial pass is performed for the most restrictive class membership (identical make-model-revision and operating context), and the set membership criteria is then successively broadened to include assets higher up in the hierarchy:
- Try propagating to other revisions for the same make-model and OpContext
- Try propagating to other make-models with same OpContext
- Try propagating to other OpContexts for same make-model
- Try propagating to other OpContexts for other make-model

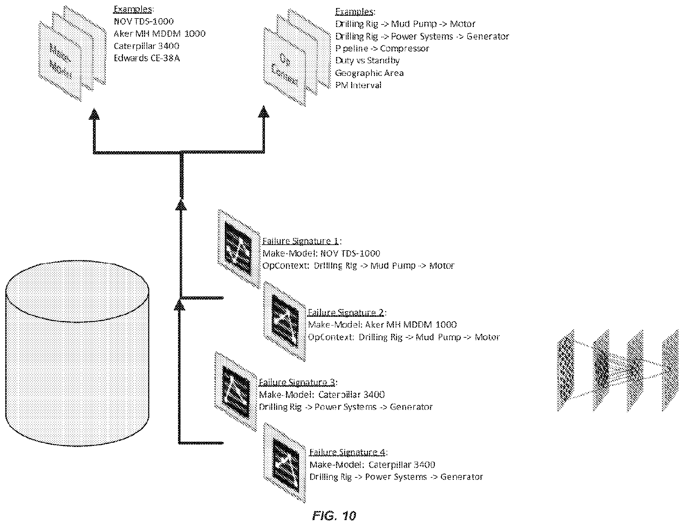

Attention is now directed to FIG. 10, which provides an illustration of transfer learning based on a global equipment taxonomy. As shown in FIG. 10, in one embodiment the taxonomy lookup is based on a comprehensive database of make-model-revision information, as well as an extensible collection of operating context (OpContext) definitions maintained within the database server 350. An Asset can have multiple OpContext keys / memberships, for example a structural one (Offshore Drilling Rig -> Mud Pump), and an equipment type one (reciprocating pump), a regional one (Gulf of Mexico), etc.

### Population-Based Learning With Deep Belief Networks

As was discussed above in the sections relating to point-to-point transfer learning, a failure signature from one asset may be combined with a normal baseline from another asset. This combined baseline and failure signature information may then be used to train a classifier to discriminate between the two. In what follows this concept is expanded to support population-based learning, which can be applied to a population of similar assets.

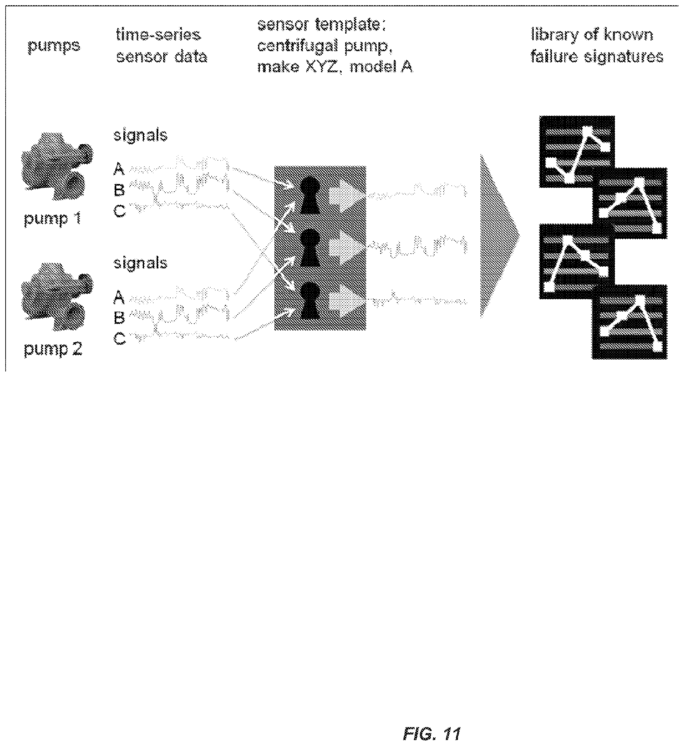

As an example, a population of three centrifugal pumps is selected. Each have the same types of sensor and make/model. The use of a sensor template provides a common "lens" through which to view each pump, as shown in FIG. 11.

### Population-Based Learning Process

1. As discussed in the preceding sections, during initial installation assets have been mapped to a global taxonomy, which in one embodiment involves associating the assets to a Make-Model key and a standard OpContext key. These keys are used to perform lookup to a global Equipment Library, in order to create target sets for population-based learning. In order to create a first target set ("Set 1 "), an initial pass is performed for the most restrictive class membership (identical target parameters of make-model-revision and operating context). Successive target sets (e.g., "Set 2", "Set 3", etc.) may then be created by successively broadening the membership criteria to include assets higher up in the hierarchy. Stated differently, the plurality of matching target parameters for equipment in Set 2 are a subset of the matching target parameters for equipment in Set 1, the most restrictive target set. An exemplary development of equipment target sets is summarized below.
   Set 1 - all other assets of same Make -Model-Rev, and OpContext Leaf node; with MATCHING sensor templates (subset of Set 2)
   Set 2 - all other assets of same Make-Model, and OpContext Leaf node; with MATCHING sensor templates (subset of Set 3)
   Set 3 - all other assets of same Make-Model; with MATCHING sensor templates
   Set 4 - all other assets of same OpContext Leaf Node; with MATCHING sensor templates
   Set 5 - all other assets of same OpContext Leaf Node Parent; with MATCHING sensor templates
2. For each asset in set, get Normal baseline data (N).
3. Select the target failure mode (FM, type of failure) that is to be learned from the population.
4. For each asset that has had one or more occurrences of this FM, get the Failure Signature (FS) data.
5. If more than 1 total occurrences, partition the FS's into two sets: training set (T), and a validation set (V)
6. Train machine learning agent on combined dataset, using all the combined normal baselines (N) from each asset, and the combined Failure Signatures (FS) from the training set (T).
7. Generalization test: Validate (check accuracy) of the agent by testing it on the example failures from the validation set (V), to see if it successfully generalized the failure signature
8. If successful generalization, then try again with Set 2; and so on through Set 5

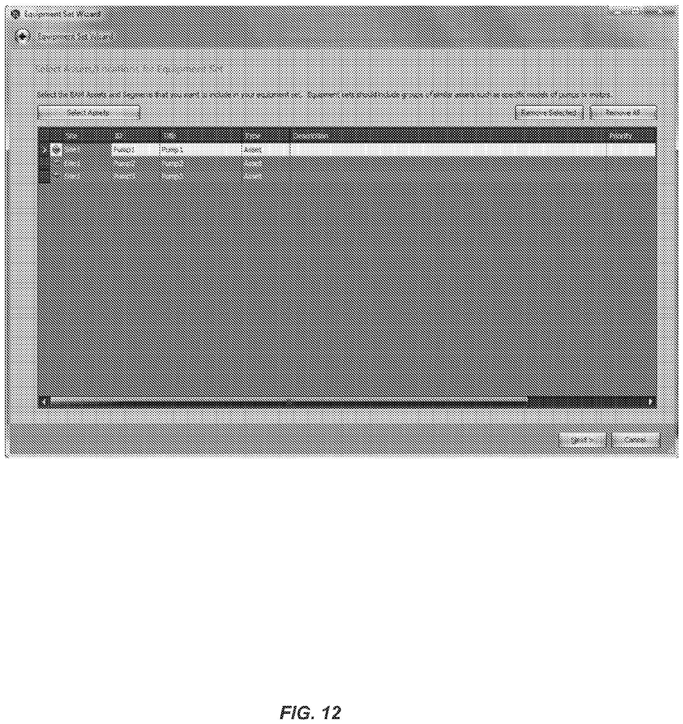

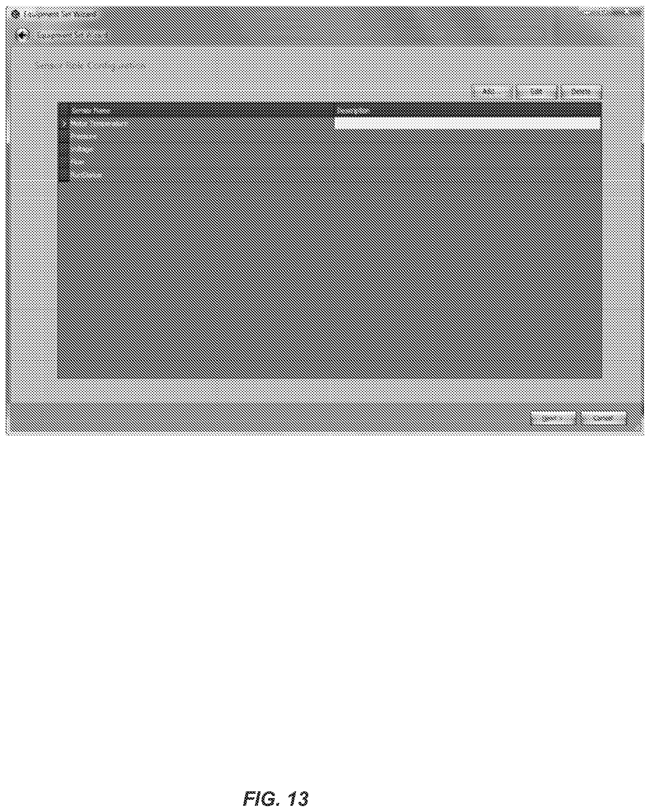

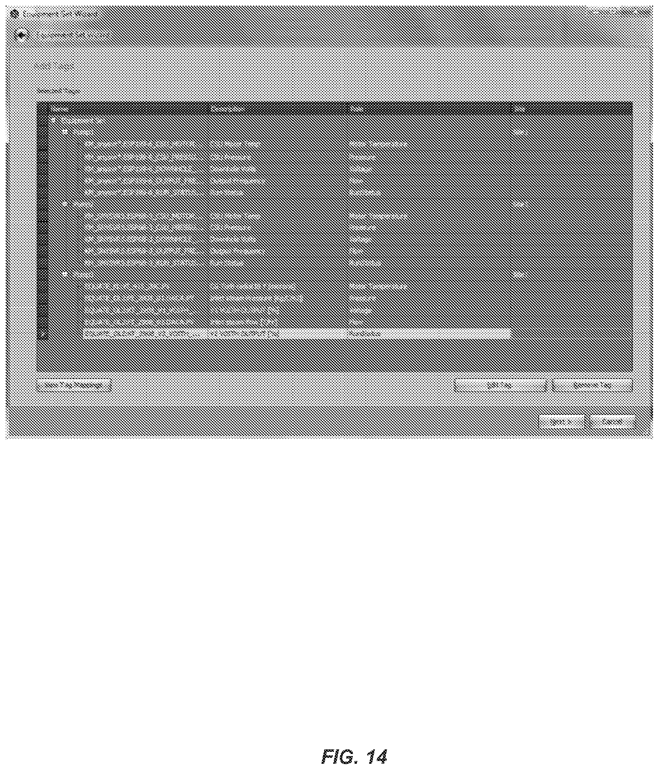

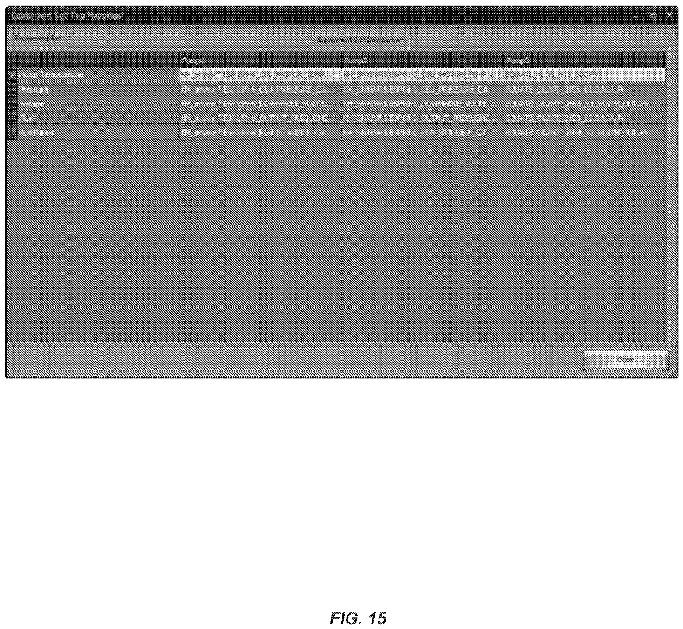

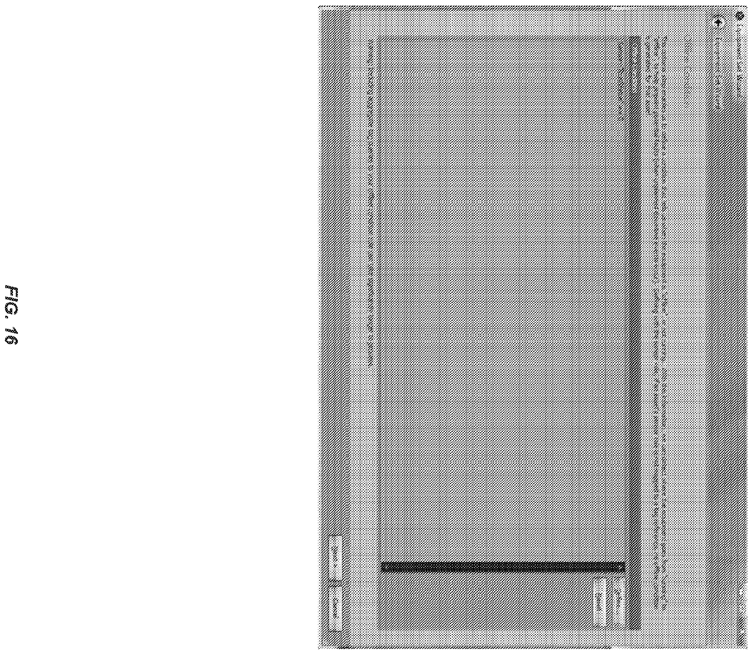

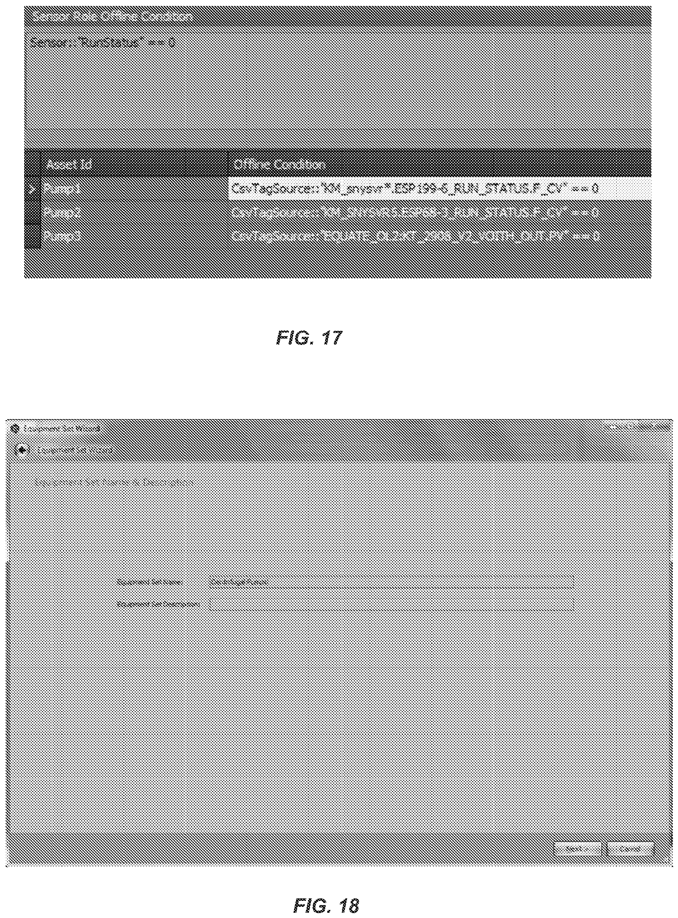

An exemplary collection of user interfaces and steps for carrying out the above process are described hereinafter. First, an Equipment Set is created for the three pumps comprising the equipment in the initial target set as follows:
1. Select the target assets (three pumps) from the list of assets (FIG. 12).
2. Next, a Sensor Template is defined for centrifugal pumps. In this case, five sensor roles are defined. These represent the standard sensors for this population of centrifugal pumps (FIG. 13).
3. Now that universal sensors (Sensor Roles) have been defined in the Sensor Template, the next step is to map the tags for each asset in the population to their associated Sensor Role. Attention is directed to FIG. 14, which illustrates an exemplary mapping. As shown, in the case of Pump 1 five tags have been mapped from a plant historian to the Sensor Roles (shown in the "Role" column) that belonging to this Sensor Template.
4. A mapping audit report ("Equipment Set Tag Mappings") may then be viewed to verify that, for each asset, all Sensor Roles have been mapped to a tag. As we can see in FIG. 15, there are no gaps, indicating that everything has been appropriately mapped.
5. In one implementation the next step requires definition of an "Offline Condition". This is a Boolean logic expression, defined based on a Sensor Role, which indicates when the asset is not running (i.e. evaluates to true when the asset is offline). In the example of FIG. 16, the condition "RunStatus" == 0 is employed. The offline condition is defined in terms of a Sensor Role, but when the condition is saved, the sensor role is translated to the associated tag for each asset, as shown in FIG. 17.
6. Finally, a name is given to the Equipment Set for this population of centrifugal pumps. In the example of FIG. 18, the population is simply named "Centrifugal Pumps".

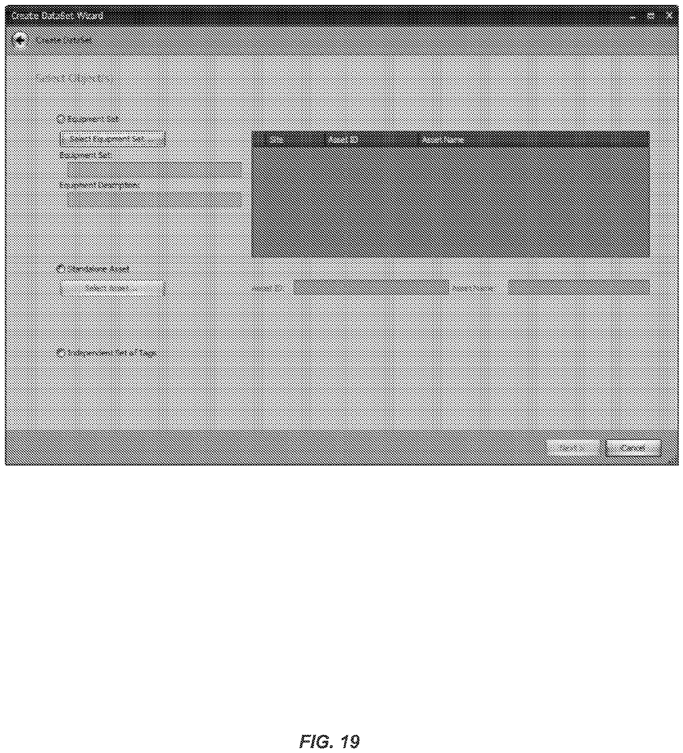

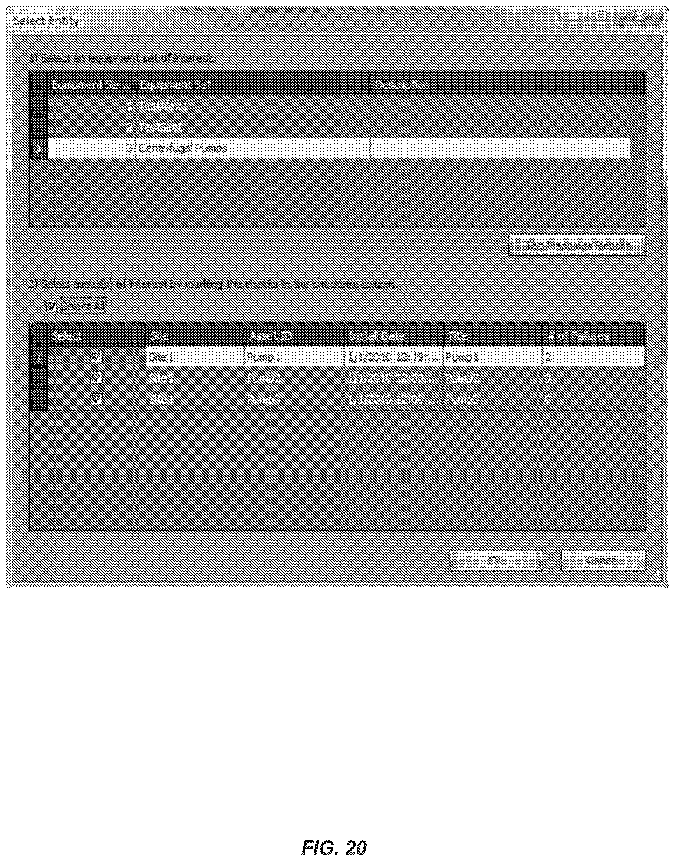

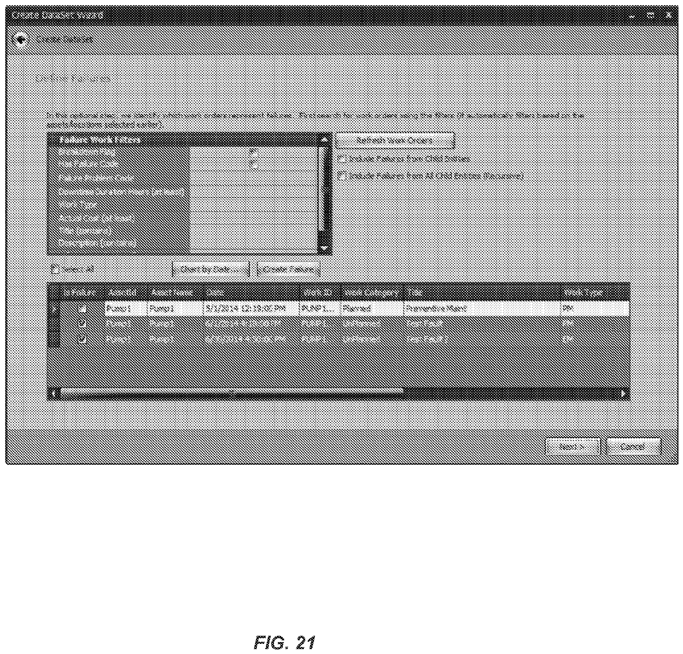

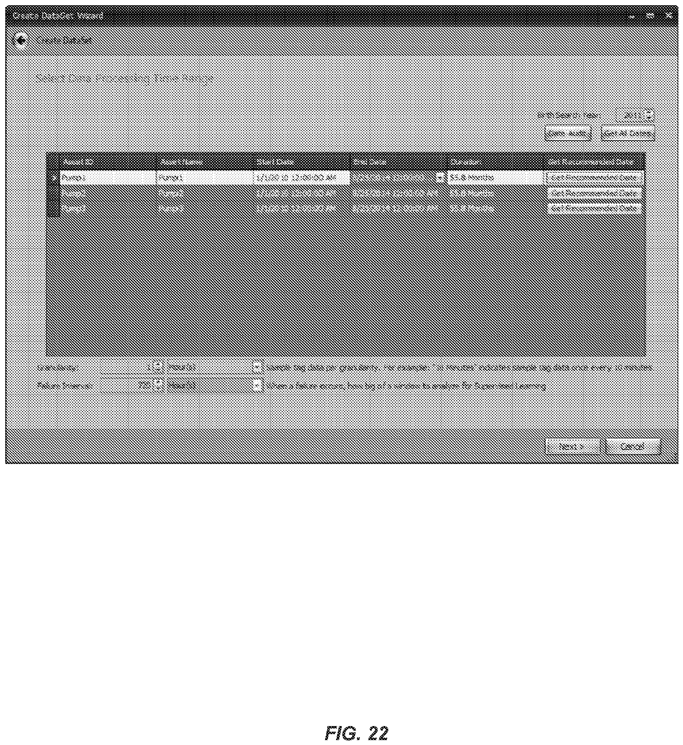

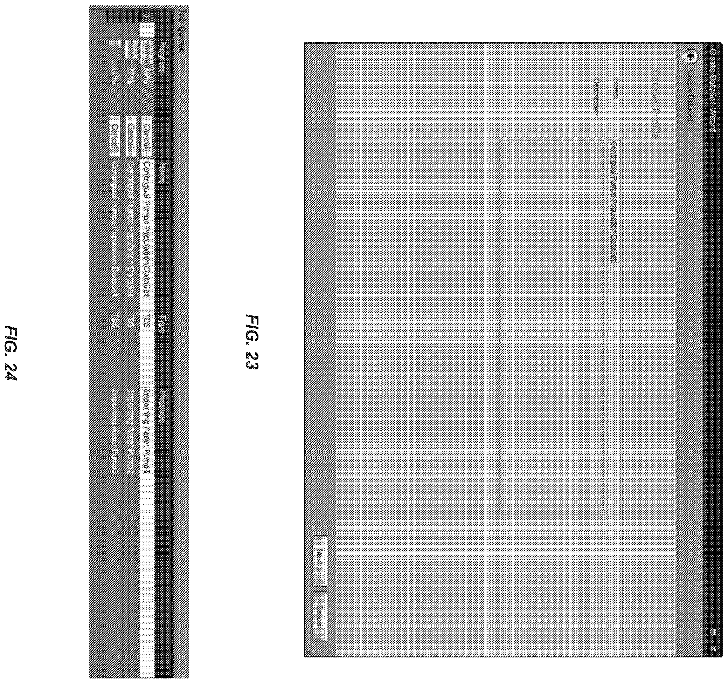

The preceding steps relate to creation of an Equipment Set representing a population of similar assets that is desired to be analyzed as a whole. With the Equipment Set in place, the next task is to define a machine learning DataSet based on the Equipment Set. An exemplary set of steps involved in performing this task are describe below.
1. Referring to FIG. 19, a Create DataSet Wizard is launched. The "Select Equipment Set" button is selected to create a population-based DataSet.
2. As shown in FIG. 20, this selection results in display of a dialog that enables selection of any of the available Equipment Sets. In the example of FIG. 2, the "Centrifugal Pumps" Equipment Set defined previously is chosen and all the assets within that set that are desired to be included in the DataSet are selected (in this case all of the three available pumps are selected).
3. Referring to FIG. 21, a user is then presented with a consolidated view of the maintenance history for all three pumps. This enables the user to identify failures from the work orders. This may be done by checking the "Is Failure" column in the list. In the example of FIG. 21, there were two failures for Pump 1.
4. Next, the user selects the date range for each asset (based on how much available sensor data and maintenance data exist). In the example of FIG. 22, the range 1/1/2010 through 8/25/2014 is selected.
5. Finally, the machine learning DataSet is given a name; in this example, the name "Centrifugal Pumps Population DataSet" is used (FIG. 23).
6. With the DataSet saved, the next step is to import the historical data from the external plant historian into the Mtell database. In this example, this results in importing historical data for all three centrifugal pumps, as shown in FIG. 24.

The preceding steps describe an exemplary process for creating a population-based DataSet for centrifugal pumps. Now that the DataSet has been created, the next step is to create a machine learning Agent. In one embodiment an Agent is an instance of a neural network (or other machine learning algorithm) which has been trained on specific data with a specific set of parameters.

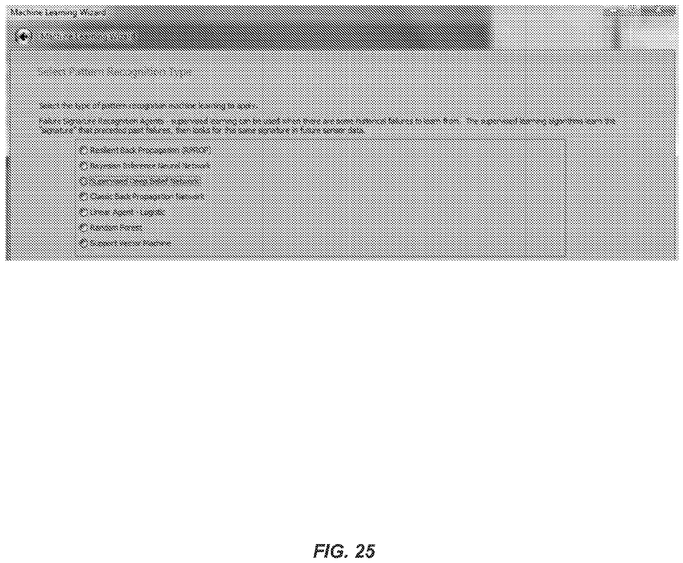

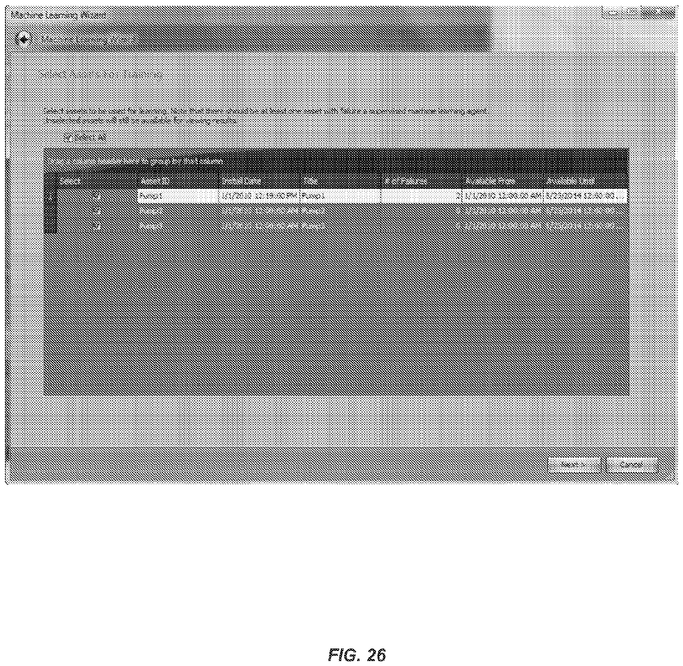

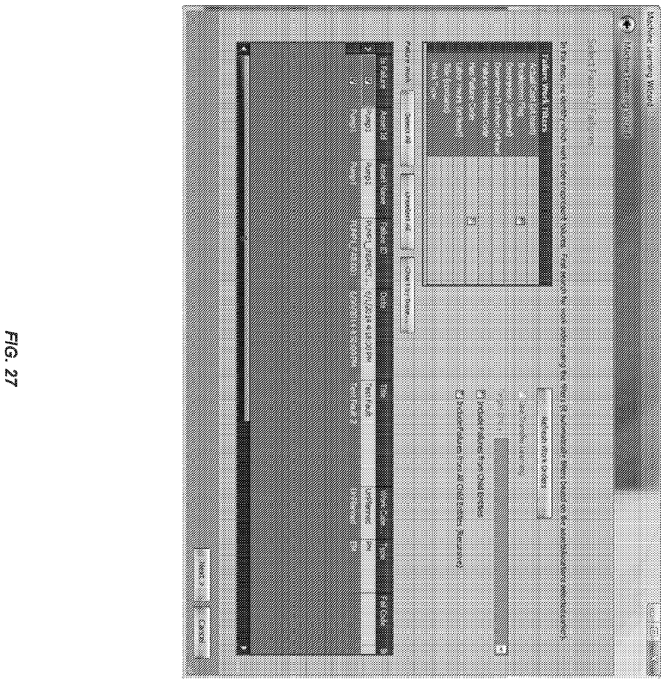

The Machine Learning Wizard may be employed to create the machine learning Agent. In one embodiment a Deep Belief Network is used as the Agent. A Deep Belief Network may entail a network with more than three (3) layers, which incorporates unsupervised feature learning, followed by a second pass with supervised learning. The use of the Machine Learning Wizard to create the machine learning agent is summarized below.
1. Select the agent type - here a Supervised Deep Belief Network for deep learning is selected (FIG. 25)
2. Select Assets for Training - in this step a user may select all of the assets from the population based DataSet, which is three centrifugal pumps (FIG. 26)
3. Select Faults / Failures - in this step, a user may select one or more failures. This provides the "labeled" data that is used for supervised training. Essentially, the failure work order marks a failure interval (the period of time prior to the failure), and all other intervals are considered normal intervals (FIG. 27).
4. After the agent is saved with above settings, the machine learning process is executed.

### Training the Deep Belief Network

The network may first be trained using four (4) layers of Restricted Boltzmann Machines (RBMs). Each successive layer may be trained using the output of the previous layer (the first layer uses the raw inputs from the sensor data).

After the pass training the RBMs, the Backpropagation neural network training algorithm may be used to fine tune the weights. This is the step where the labeled failure is used, which tunes the feature detector weights from the RBMs for the classification task.

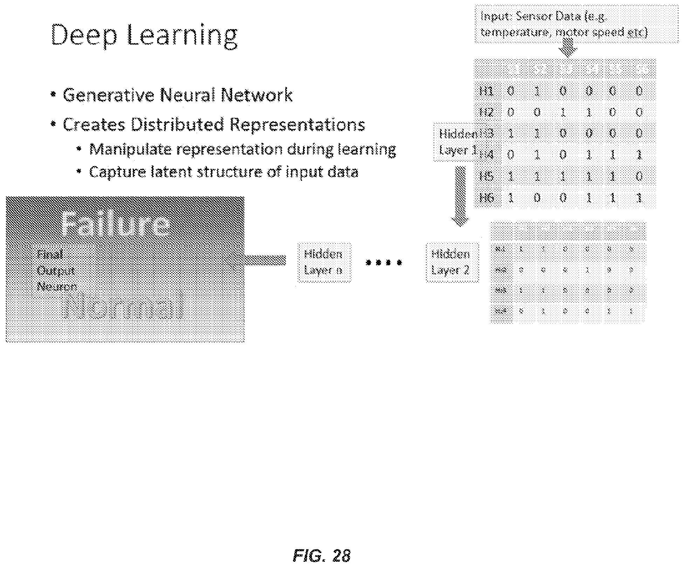

A diagram of this process is shown in FIG. 28, which illustrates how a single output neuron (in the top-most layer) indicates failure vs normal.

Specific details are given in the above description to provide a thorough understanding of the embodiments. However, it is understood that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Implementation of the techniques, blocks, steps and means described above may be done in various ways. For example, these techniques, blocks, steps and means may be implemented in hardware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described above, and/or a combination thereof.

Also, it is noted that the embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Furthermore, embodiments may be implemented by hardware, software, scripting languages, firmware, middleware, microcode, hardware description languages, and/or any combination thereof. When implemented in software, firmware, middleware, scripting language, and/or microcode, the program code or code segments to perform the necessary tasks may be stored in a machine readable medium such as a storage medium. A code segment or machine-executable instruction may represent a procedure, a function, a subprogram, a program, a routine, a subroutine, a module, a software package, a script, a class, or any combination of instructions, data structures, and/or program statements. A code segment may be coupled to another code segment or a hardware circuit by passing and/or receiving information, data, arguments, parameters, and/or memory contents. Information, arguments, parameters, data, etc. may be passed, forwarded, or transmitted via any suitable means including memory sharing, message passing, token passing, network transmission, etc.

For a firmware and/or software implementation, the methodologies may be implemented with modules (e.g., procedures, functions, and so on) that perform the functions described herein. Any machine-readable medium tangibly embodying instructions may be used in implementing the methodologies described herein. For example, software codes may be stored in a memory. Memory may be implemented within the processor or external to the processor. As used herein the term "memory" refers to any type of long term, short term, volatile, nonvolatile, or other storage medium and is not to be limited to any particular type of memory or number of memories, or type of media upon which memory is stored.

Moreover, as disclosed herein, the term "storage medium" may represent one or more memories for storing data, including read only memory (ROM), random access memory (RAM), magnetic RAM, core memory, magnetic disk storage mediums, optical storage mediums, flash memory devices and/or other machine readable mediums for storing information. The term "machine-readable medium" includes, but is not limited to portable or fixed storage devices, optical storage devices, wireless channels, and/or various other storage mediums capable of storing that contain or carry instruction(s) and/or data.

In conclusion, embodiments in accordance with the disclosure provide, among other things, a system and method for automated plant asset failure detection using failure signatures or equivalent information transferred among plant sites consistent with a universal equipment taxonomy. Those skilled in the art can readily recognize that numerous variations and substitutions may be made in the disclosed embodiments, their use and their configuration to achieve substantially the same results as achieved by the embodiments described herein.

## Claims

1. A method for using failure signature information to monitor operation of one or more monitored units of equipment (110, 112, 320-1) configured with sensors (120, 122), the method comprising:
identifying a first target set of equipment being a first plurality of units of equipment (320-1), wherein each equipment unit of the first plurality of units of equipment (320-1) is **characterized by** a first plurality of matching target parameters and wherein the one or more monitored units of equipment includes at least one unit of equipment not included in the first target set of equipment;
receiving sensor data from sensors associated with the first plurality of units of equipment (320-1);
storing failure signatures, contained in the received sensor data, in a known failure signature database;
training, using a learning agent training module (540), a failure agent to learn to detect operational conditions associated with onset of an equipment failure by identifying patterns or relationships within the sensor data by learning to discriminate between first normal baseline data and a first training set of failure signatures wherein the first normal baseline data is derived from a portion of the sensor data associated with operation of the first plurality of units of equipment (320-1) in a normal mode and wherein the first training set of first failure signatures is derived from a portion of the sensor data associated with operation of the first plurality of units of equipment (320-1) in a failure mode;
determining for the first target set of equipment, using a processor (450), whether the failure agent is configured to accurately detect operational conditions associated with onset of an equipment failure to discriminate between the first normal baseline data and the first training set of failure signatures by testing the failure agent on example failures of a first validation set of failure signatures selected from the sensor data associated with operation of the first plurality of units of equipment (320-1) in the failure mode;
receiving monitored sensor signals produced by one or more monitoring sensors (120, 122) of the at least one unit of equipment not included in the first target set of equipment; and
if the failure agent is determined to be configured to accurately detect operational conditions associated with onset of an equipment failure, activating the learning agent training module (540), wherein:
said activating includes:
i) if the one or more monitoring sensors comprises a subset of sensors of the first target set of equipment, using the failure agent to monitor data included within the received monitored sensor signals; and
ii) if the one or more monitoring sensors comprises at least one more sensor than units of equipment in the first target set of equipment, retraining the failure agent for the at least one unit of equipment not included in the first target set of equipment using default parameters from the failure agent, and flatlined past history for the at least one more sensor; and
said monitoring includes detecting, from patterns or relationships within the data included within the received monitored sensor signals, an operational condition identifying an equipment failure onset of the at least one unit of equipment and thereby enable prediction of failure of the at least one unit of equipment (110,112) in the failure mode.

2. The method of claim 1, further including:
identifying a second target set of equipment being a second plurality of units of equipment (320-2), wherein each equipment unit of the second plurality of units of equipment (320-2) is **characterized by** a second plurality of matching target parameters, the second plurality of matching target parameters are a subset of the first plurality of matching target parameters and wherein the one or more monitored units of equipment (110, 112) include at least one unit of equipment not included in the second target set of equipment;
receiving sensor data from sensors associated with the second plurality of units of equipment (320-2);
training, using a learning agent training module (540) operating on the received sensor data from the sensors associated with the second plurality of units of equipment, a failure agent to learn to detect operational conditions associated with onset of an equipment failure by identifying patterns or relationships within the sensor data by learning to discriminate between second normal baseline data and a second training set of failure signatures; wherein the second normal baseline data is derived from a portion of the sensor data associated with operation of the second plurality of units of equipment (320-2) in normal mode and wherein the second training set of failure signatures is derived from a portion of the sensor data associated with operation of the second plurality of units of equipment (320-2) in failure mode;
determining for the second target set of equipment, using the processor (450), whether the failure agent is configured to accurately detect operational conditions associated with onset of an equipment failure to discriminate between the second normal baseline data and the second training set of failure signatures by testing the failure agent on example failures of a second validation set of failure signatures selected from sensor data associated with operation of the second plurality of units of equipment (320-2) in the failure mode;
receiving monitored sensor signals produced by one or more monitoring sensors (120, 122) of the at least one unit of equipment not included in the second target set of equipment; and
if the failure agent is determined to be configured to accurately detect operational conditions associated with onset of an equipment failure, activating the learning agent training module (540); wherein:
said activating includes:
i) if the one or more monitoring sensors of the at least one unit of equipment not included in the second target set of equipment comprises a subset of sensors of the second target set of equipment, using the failure agent to monitor data included within the received monitored sensor signals produced by the one or more monitoring sensors (120, 122) of the at least one unit of equipment not included in the second target set of equipment; and
ii) if the one or more monitoring sensors of the at least one unit of equipment not included in the second target set of equipment comprises at least one more sensor than units of equipment in the second target set of equipment, retraining the failure agent for the at least one unit of equipment not included in the second target set of equipment using default parameters from the failure agent, and flatlined past history for the at least one more sensor; and
said monitoring includes detecting, from patterns or relationships within the data included within the received monitored sensor signals produced by the one or more monitoring sensors (120, 122) of the at least one unit of equipment not included in the second target set of equipment, an operational condition identifying an equipment failure onset of the at least one unit of equipment not included in the second target set of equipment and thereby enable prediction of failure of the at least one unit of equipment not included in the second target set of equipment (110,112) in the failure mode.

3. The method of claim 2, further including:
identifying a third target set of equipment being a third plurality of units of equipment, wherein each equipment unit of the third plurality of units of equipment is **characterized by** a third plurality of matching target parameters, the third plurality of matching target parameters are a subset of the second plurality of matching target parameters; and wherein the one or more monitored units of equipment (110, 112) include at least one unit of equipment not included in the third target set of equipment;
receiving sensor data from sensors associated with the third plurality of units of equipment;
training, using a learning agent training module (540) operating on the received sensor data from the sensors associated with the third plurality of units of equipment, a failure agent to learn to detect operational conditions associated with onset of an equipment failure by identifying patterns of relationships within the sensor data by learning to discriminate between third normal baseline data and a third training set of failure signatures; wherein the third normal baseline data is derived from a portion of the sensor data associated with operation of the third plurality of units of equipment in normal mode and wherein the third training set of failure signatures is derived from a portion of the sensor data associated with operation of the third plurality of units of equipment in failure mode;
determining for the third target set of equipment, using the processor (450), whether the failure agent is configured to accurately detect operational conditions associated with onset of an equipment failure to discriminate between the third normal baseline data and the third training set of failure signatures by testing the failure agent on example failures of a third validation set of failure signatures selected from sensor data associated with operation of the third plurality of units of equipment in the failure mode;
receiving monitored sensor signals produced by one or more monitoring sensors (120, 122) of the at least one unit of equipment not included in the third target set of equipment; and
if the failure agent is determined to be configured to accurately detect operational conditions associated with onset of an equipment failure, activating the learning agent training module (540); wherein:
said activating includes:
i) if the one or more monitoring sensors of the at least one unit of equipment not included in the third target set of equipment comprises a subset of sensors of the third target set of equipment, using the failure agent to monitor data included within the received monitored sensor signals produced by the one or more monitoring sensors of the at least one unit of equipment not included in the third target set of equipment; and
ii) if the one or more monitoring sensors of the at least one unit of equipment not included in the third target set of equipment comprises at least one more sensor than units of equipment in the third target set of equipment, retraining the failure agent for the at least one unit of equipment not included in the third target set of equipment using default parameters from the failure agent, and flatlined past history for the at least one more sensor; and
said monitoring includes detecting, from patterns or relationships within the data included within the received monitored sensor signals produced by the one or more monitoring sensors of the at least one unit of equipment not included in the third target set of equipment, an operational condition identifying an equipment failure onset of the at least one unit of equipment not included in the third target set of equipment and thereby enable prediction of failure of the at least one unit of equipment not included in the third target set of equipment (110,112) in the failure mode.

4. The method of claim 1, wherein the first plurality of matching target parameters include at least one of: (i) make and model, and (ii) operating context.

5. The method of claim 2, wherein the first plurality of matching target parameters include each of (i) make and model, and (ii) operating context and wherein the second plurality of matching target parameters include one of (i) make and model, and (ii) operating context.

6. The method of claim 2, wherein the first plurality of matching target parameters include (i) make, model and revision, and (ii) operating context and wherein the second plurality of matching target parameters include (i) make and model and (ii) operating context.

7. The method of claim 1, wherein the determining includes determining whether the failure agent may be configured to discriminate between the first normal baseline data and the first failure signature information with an accuracy exceeding a configurable threshold.

8. The method of claim 2, wherein:
the first plurality of units of equipment (320-1) are of a first make and model and a first revision, and are associated with a first operational context, and
the second plurality of units of equipment (320-2) include equipment units that are of the first make and model and the first revision, and are associated with the first operational context and further include other equipment units that are of the first make and model and a second revision different from the first revision, and are associated with the first operational context.

9. The method of claim 1, wherein the units of equipment are pumps.

10. The method of claim 1, comprising:
receiving a set of time series waveforms from sensors associated with the first plurality of units of equipment (320-1), the time series waveforms including sensor data values; and
processing, using the processor, the time series waveforms to generate a plurality of derived inputs wherein the derived inputs and the sensor data values collectively comprise the sensor data.

11. The method of claim 1, wherein the failure signatures are learnt based on fault conditions in work order histories associated with the first plurality of units of equipment (320-1).

12. A plant asset failure prediction system comprising:
a memory, a user interface, a database, a network interface and processor (450) coupled to the memory and configured to work in conjunction with one or more monitored units of plant equipment configured with one or more monitoring sensors (120, 122), wherein the user interface is configured to receive user input identifying a first target set of equipment being a first plurality of units of equipment (320-1), wherein each equipment unit of the first plurality of units of equipment (320-1) is **characterised by** a first plurality of matching target parameters and wherein the one or more monitored units of plant equipment configured with the one or more monitoring sensors includes at least one unit of equipment not included in the first target set of equipment;
wherein the network interface is configured to receive sensor data from sensors associated with the first plurality of units of equipment (320-1);
wherein the database is configured to store failure signatures contained in the received sensor data;
wherein the processor (450) is configured to operate a learning agent training module (540) on the received sensor data to train a failure agent to learn to detect operational conditions associated with onset of an equipment failure by identifying patterns or relationships within the sensor data by learning to discriminate between normal baseline data for the first target set of equipment and a training set of failure signatures for the target set of equipment; wherein the normal baseline data of the first target set of equipment is derived from a portion of the sensor data associated with operation of the first plurality of units of equipment (320-1) in a normal mode and wherein the training set of failure signatures is derived from a portion of the sensor data associated with operation of the first plurality of units of equipment (320-1) in a failure mode;
wherein the processor (450) is further configured to determine for the first target set of equipment whether the failure agent is configured to accurately detect operational conditions associated with onset of an equipment failure to discriminate between the normal baseline data and the training set of failure signatures for the target set of equipment by testing the failure agent on example failures of a validation set of failure signatures selected from sensor data associated with operation of the first plurality of units of equipment (320-1) in the failure mode;
receive monitored sensor signals produced by one or more monitoring sensors (120, 122) of the at least one unit of equipment not included in the first target set of equipment; and
if the failure agent is determined to be configured to accurately detect operational conditions associated with onset of an equipment failure, activate, by the processor (450), the learning agent training module (540); wherein:
said activating includes:
i) if the one or more monitoring sensors comprises a subset of sensors of the first target set of equipment, using the failure agent to monitor data included within the received monitored sensor signals; or
ii) if the one or more monitoring sensors comprises at least one more sensor than units of equipment in the first target set of equipment, retraining the failure agent for the at least one unit of equipment not included in the first target set of equipment using default parameters from the failure agent, and flatlined past history for the at least one more sensor; and
said monitoring includes detecting, from patterns or relationships within the data included within the received monitored sensor signals, an operational condition identifying an equipment failure onset of the at least one unit of equipment and thereby enable prediction of failure of the at least one unit of equipment (110, 112) in the failure mode.

13. The system of claim 12, wherein the network interface is configured to receive a set of time series wave forms from the one or more monitoring sensors, the time series wave forms including sensor data values, and wherein the processor (450) is configured with code to process the time series wave forms to generate a plurality of derived inputs, wherein the sensor data includes at least one of a subset of the sensor data values and one or more of the derived inputs.

14. The system of claim 13, wherein the sensor data is identified using a sensor template.

15. The system of claim 12, wherein the failure signatures are learnt based on fault conditions in work order histories associated with the first plurality of units of equipment (320-1).

## Patentansprüche

1. Verfahren zum Verwenden von Fehlersignaturinformationen, um den Betrieb von ein oder mehr überwachten Geräteeinheiten (110, 112, 320-1), die mit Sensoren (120, 122) gestaltet sind, zu überwachen, wobei das Verfahren aufweist:
Identifizieren eines ersten Gerätezielsatzes, der eine erste Mehrheit von Geräteeinheiten (320-1) ist, wobei jede Geräteeinheit der ersten Mehrheit von Geräteeinheiten (320-1) durch eine erste Mehrheit von zusammenpassenden Zielparametern gekennzeichnet ist und wobei die ein oder mehr überwachten Geräteeinheiten wenigstens eine Geräteeinheit enthalten, die nicht im ersten Gerätezielsatz enthalten ist;
Empfangen von Sensordaten von der ersten Mehrheit von Geräteeinheiten (320-1) zugeordneten Sensoren;
Speichern von Fehlersignaturen, die in den empfangenen Sensordaten enthalten sind, in einer Datenbank bekannter Fehlersignaturen;
Training eines Fehleragenten unter Verwendung eines Lernagenten-Trainingsmoduls (540), um zu lernen, durch Identifizieren von Mustern oder Beziehungen in den Sensordaten Betriebszustände zu erkennen, die mit dem Auftreten eines Gerätefehlers verbunden sind, durch Lernen, um zwischen ersten normalen Basisliniendaten und einem ersten Trainingssatz von Fehlersignaturen zu unterscheiden, wobei die ersten normalen Basisliniendaten von einem Teil der Sensordaten abgeleitet werden, die mit dem Betrieb der ersten Mehrheit von Geräteeinheiten (320-1) in einem Normalbetrieb verbunden sind, und wobei der erste Trainingssatz von ersten Fehlersignaturen von einem Teil der Sensordaten abgeleitet wird, die mit dem Betrieb der ersten Mehrheit von Geräteeinheiten (320-1) in einem Fehlermodus verbunden sind;
Bestimmen für den ersten Gerätezielsatz unter Verwendung eines Prozessors (450), ob der Fehleragent konfiguriert ist, um Betriebszustände richtig zu erkennen, die mit dem Auftreten eines Gerätefehlers verbunden sind, um zwischen den ersten normalen Basisliniendaten und dem ersten Trainingssatz von Fehlersignaturen zu unterscheiden, durch Testen des Fehleragenten an Beispielfehlern eines ersten Validierungssatzes von Fehlersignaturen, die aus den Sensordaten verbunden mit dem Betrieb der ersten Mehrheit von Geräteeinheiten (320-1) im Fehlermodus gewählt sind;
Empfangen von überwachten Sensorsignalen, die von einem oder mehreren Überwachungssensoren (120, 122) der wenigstens einen Geräteeinheit, die nicht im ersten Gerätezielsatz enthalten ist, erzeugt werden; und
wenn bestimmt wird, dass der Fehleragent konfiguriert ist, um mit dem Auftreten eines Gerätefehlers verbundene Betriebszustände richtig zu erkennen, Aktivieren des Lernagenten-Trainingsmoduls (540), wobei
das Aktivieren enthält:
i) wenn die ein oder mehr Überwachungssensoren eine Teilmenge von Sensoren des ersten Gerätezielsatzes aufweisen, Verwenden des Fehleragenten, um Daten zu überwachen, die in den empfangenen überwachten Sensorsignalen enthalten sind; und
ii) wenn die ein oder mehr Überwachungssensoren wenigstens einen Sensor mehr als Geräteeinheiten im ersten Gerätezielsatz aufweisen, Umtrainieren des Fehleragenten für die wenigstens eine Geräteeinheit, die nicht im ersten Gerätezielsatz enthalten ist, unter Verwendung von Standardparametern vom Fehleragenten und einer Flatline-Vorgeschichte für den wenigstens noch einen Sensor; und
das Überwachen ein Erkennen eines Betriebszustandes, der ein Gerätefehlerauftreten der wenigstens einen Geräteeinheit identifiziert und dadurch eine Vorhersage eines Fehlers der wenigstens einen Geräteeinheit (110, 112) im Fehlermodus ermöglicht, aus Mustern oder Beziehungen in den in den empfangenen überwachten Sensorsignalen enthaltenen Daten enthält.

2. Verfahren nach Anspruch 1, ferner enthaltend:
Identifizieren eines zweiten Gerätezielsatzes, der eine zweite Mehrheit von Geräteeinheiten (320-2) ist, wobei jede Geräteeinheit der zweiten Mehrheit von Geräteeinheiten (320-2) durch eine zweite Mehrheit von zusammenpassenden Zielparametern gekennzeichnet ist, die zweite Mehrheit von zusammenpassenden Zielparametern eine Teilmenge der ersten Mehrheit von zusammenpassenden Zielparametern ist, und wobei die ein oder mehr überwachten Geräteeinheiten (110, 112) wenigstens eine Geräteeinheit enthalten, die nicht im zweiten Gerätezielsatz enthalten ist;
Empfangen von Sensordaten von der zweiten Mehrheit von Geräteeinheiten (320-1) zugeordneten Sensoren;
Training eines Fehleragenten unter Verwendung eines Lernagenten-Trainingsmoduls (540), der auf den empfangenen Sensordaten von den der zweiten Mehrheit von Geräteeinheiten zugeordneten Sensoren tätig ist, um zu lernen, durch Identifizieren von Mustern oder Beziehungen in den Sensordaten Betriebszustände zu erkennen, die mit dem Auftreten eines Gerätefehlers verbunden sind, durch Lernen, um zwischen zweiten normalen Basisliniendaten und einem zweiten Trainingssatz von Fehlersignaturen zu unterscheiden, wobei die zweiten normalen Basisliniendaten von einem Teil der Sensordaten abgeleitet werden, die mit dem Betrieb der zweiten Vielzahl von Geräteeinheiten (320-2) in einem Normalbetrieb verbunden sind, und wobei der zweite Trainingssatz von Fehlersignaturen von einem Teil der Sensordaten abgeleitet wird, die mit dem Betrieb der zweiten Mehrheit von Geräteeinheiten (320-2) in einem Fehlermodus verbunden sind;
Bestimmen für den zweiten Gerätezielsatz unter Verwendung des Prozessors (450), ob der Fehleragent konfiguriert ist, um Betriebszustände richtig zu erkennen, die mit dem Auftreten eines Gerätefehlers verbunden sind, um zwischen den zweiten normalen Basisliniendaten und dem zweiten Trainingssatz von Fehlersignaturen zu unterscheiden, durch Testen des Fehleragenten an Beispielfehlern eines zweiten Validierungssatzes von Fehlersignaturen, die aus den Sensordaten verbunden mit dem Betrieb der zweiten Mehrheit von Geräteeinheiten (320-2) im Fehlermodus gewählt sind;
Empfangen von überwachten Sensorsignalen, die von einem oder mehreren Überwachungssensoren (120, 122) der wenigstens einen Geräteeinheit, die nicht im zweiten Gerätezielsatz enthalten ist, erzeugt werden; und
wenn bestimmt wird, dass der Fehleragent konfiguriert ist, um mit dem Auftreten eines Gerätefehlers verbundene Betriebszustände richtig zu erkennen, Aktivieren des Lernagenten-Trainingsmoduls (540), wobei
das Aktivieren enthält:
i) wenn die ein oder mehr Überwachungssensoren der wenigstens einen Geräteeinheit, die nicht im zweiten Gerätezielsatz enthalten ist, eine Teilmenge von Sensoren des zweiten Gerätezielsatzes aufweisen, Verwenden des Fehleragenten, um Daten zu überwachen, die in den empfangenen überwachten Sensorsignalen enthalten sind, die von den ein oder mehr Überwachungssensoren (120, 122) der wenigstens einen Geräteeinheit, die nicht im zweiten Gerätezielsatz enthalten ist, erzeugt werden; und
ii) wenn die ein oder mehr Überwachungssensoren der wenigstens einen Geräteeinheit, die nicht im zweiten Gerätezielsatz enthalten ist, wenigstens einen Sensor mehr als Geräteeinheiten im zweiten Gerätezielsatz aufweisen, Umtrainieren des Fehleragenten für die wenigstens eine Geräteeinheit, die nicht im zweiten Gerätezielsatz enthalten ist, unter Verwendung von Standardparametern vom Fehleragenten und einer Flatline-Vorgeschichte für den wenigstens noch einen Sensor; und
das Überwachen ein Erkennen eines Betriebszustandes, der ein Gerätefehlerauftreten der wenigstens einen Geräteeinheit identifiziert, die nicht im zweiten Gerätezielsatz enthalten ist, und dadurch eine Vorhersage eines Fehlers der wenigstens einen Geräteeinheit, die nicht im zweiten Gerätezielsatz (110, 112) enthalten ist, im Fehlermodus ermöglicht, aus Mustern oder Beziehungen in den Daten, die in den empfangenen überwachten Sensorsignalen enthalten sind, die von den ein oder mehr Überwachungssensoren (120, 122) der wenigstens einen Geräteeinheit, die nicht im zweiten Gerätezielsatz enthalten ist, erzeugt werden, enthält.

3. Verfahren nach Anspruch 2, ferner enthaltend:
Identifizieren eines dritten Gerätezielsatzes, der eine dritte Mehrheit von Geräteeinheiten (320-2) ist, wobei jede Geräteeinheit der dritten Mehrheit von Geräteeinheiten (320-2) durch eine dritte Mehrheit von zusammenpassenden Zielparametern gekennzeichnet ist, die dritte Mehrheit von zusammenpassenden Zielparametern eine Teilmenge der zweiten Mehrheit von zusammenpassenden Zielparametern ist, und wobei die ein oder mehr überwachten Geräteeinheiten (110, 112) wenigstens eine Geräteeinheit enthalten, die nicht im dritten Gerätezielsatz enthalten ist;
Empfangen von Sensordaten von der dritten Mehrheit von Geräteeinheiten zugeordneten Sensoren;
Training eines Fehleragenten unter Verwendung eines Lernagenten-Trainingsmoduls (540), der auf den empfangenen Sensordaten von den der zweiten Mehrheit von Geräteeinheiten zugeordneten Sensoren tätig ist, um zu lernen, durch Identifizieren von Mustern oder Beziehungen in den Sensordaten Betriebszustände zu erkennen, die mit dem Auftreten eines Gerätefehlers verbunden sind, durch Lernen, um zwischen dritten normalen Basisliniendaten und einem dritten Trainingssatz von Fehlersignaturen zu unterscheiden, wobei die dritten normalen Basisliniendaten von einem Teil der Sensordaten abgeleitet werden, die mit dem Betrieb der dritten Mehrheit von Geräteeinheiten in einem Normalbetrieb verbunden sind, und wobei der dritte Trainingssatz von Fehlersignaturen von einem Teil der Sensordaten abgeleitet wird, die mit dem Betrieb der dritten Mehrheit von Geräteeinheiten in einem Fehlermodus verbunden sind;
Bestimmen für den dritten Gerätezielsatz unter Verwendung des Prozessors (450), ob der Fehleragent konfiguriert ist, um Betriebszustände richtig zu erkennen, die mit dem Auftreten eines Gerätefehlers verbunden sind, um zwischen den dritten normalen Basisliniendaten und dem dritten Trainingssatz von Fehlersignaturen zu unterscheiden, durch Testen des Fehleragenten an Beispielfehlern eines dritten Validierungssatzes von Fehlersignaturen, die aus den Sensordaten verbunden mit dem Betrieb der dritten Mehrheit von Geräteeinheiten im Fehlermodus gewählt sind;
Empfangen von überwachten Sensorsignalen, die von einem oder mehreren Überwachungssensoren (120, 122) der wenigstens einen Geräteeinheit, die nicht im dritten Gerätezielsatz enthalten ist, erzeugt werden; und
wenn bestimmt wird, dass der Fehleragent konfiguriert ist, um mit dem Auftreten eines Gerätefehlers verbundene Betriebszustände richtig zu erkennen, Aktivieren des Lernagenten-Trainingsmoduls (540), wobei
das Aktivieren enthält:
i) wenn die ein oder mehr Überwachungssensoren der wenigstens einen Geräteeinheit, die nicht im dritten Gerätezielsatz enthalten ist, eine Teilmenge von Sensoren des dritten Gerätezielsatzes aufweisen, Verwenden des Fehleragenten, um Daten zu überwachen, die in den empfangenen überwachten Sensorsignalen enthalten sind, die von den ein oder mehr Überwachungssensoren der wenigstens einen Geräteeinheit, die nicht im dritten Gerätezielsatz enthalten ist, erzeugt werden; und
ii) wenn die ein oder mehr Überwachungssensoren der wenigstens einen Geräteeinheit, die nicht im dritten Gerätezielsatz enthalten ist, wenigstens einen Sensor mehr als Geräteeinheiten im dritten Gerätezielsatz aufweisen, Umtrainieren des Fehleragenten für die wenigstens eine Geräteeinheit, die nicht im dritten Gerätezielsatz enthalten ist, unter Verwendung von Standardparametern vom Fehleragenten und einer Flatline-Vorgeschichte für den wenigstens noch einen Sensor; und
das Überwachen ein Erkennen eines Betriebszustandes, der ein Gerätefehlerauftreten der wenigstens einen Geräteeinheit identifiziert, die nicht im dritten Gerätezielsatz enthalten ist, und dadurch eine Vorhersage eines Fehlers der wenigstens einen Geräteeinheit, die nicht im dritten Gerätezielsatz (110, 112) enthalten ist, im Fehlermodus ermöglicht, aus Mustern oder Beziehungen in den Daten, die in den empfangenen überwachten Sensorsignalen enthalten sind, die von den ein oder mehr Überwachungssensoren (120, 122) der wenigstens einen Geräteeinheit, die nicht im dritten Gerätezielsatz enthalten ist, erzeugt werden, enthält.

4. Verfahren nach Anspruch 1, bei welchem die erste Mehrheit von zusammenpassenden Zielparametern wenigstens eines enthält von: (i) Marke und Modell und (ii) Betriebskontext.

5. Verfahren nach Anspruch 2, bei welchem die erste Mehrheit von zusammenpassenden Zielparametern jedes enthält von (i) Marke und Modell und (ii) Betriebskontext, und bei welchem die zweite Mehrheit von zusammenpassenden Zielparametern eines enthält von (i) Marke und Modell und (ii) Betriebskontext.

6. Verfahren nach Anspruch 2, bei welchem die erste Mehrheit von zusammenpassenden Zielparametern (i) Marke, Modell und Überarbeitung und (ii) Betriebskontext enthält, und bei welchem die zweite Mehrheit von zusammenpassenden Zielparametern (i) Marke und Modell und (ii) Betriebskontext enthält.

7. Verfahren nach Anspruch 1, bei welchem das Bestimmen ein Bestimmen enthält, ob der Fehleragent konfiguriert sein kann, um zwischen den ersten normalen Basisliniendaten und den ersten Fehlersignaturinformationen mit einer Genauigkeit zu unterscheiden, die einen konfigurierbaren Schwellenwert überschreitet.

8. Verfahren nach Anspruch 2, bei welchem
die erste Mehrheit von Geräteeinheiten (320-1) von einer ersten Marke und Modell und einer ersten Überarbeitung ist und mit einem ersten Betriebskontext verbunden ist, und
die zweite Mehrheit von Geräteeinheiten (320-2) Geräteeinheiten enthält, die von der ersten Marke und Modell und der ersten Überarbeitung sind und mit dem ersten Betriebskontext verbunden sind, und ferner andere Geräteeinheiten enthält, die von der ersten Marke und Modell und einer zweiten Überarbeitung unterschiedlich von der ersten Überarbeitung und sind mit dem ersten Betriebskontext verbunden sind.

9. Verfahren nach Anspruch 1, bei welchem die Geräteeinheiten Pumpen sind.

10. Verfahren nach Anspruch 1, aufweisend:
Empfangen eines Satzes von Zeitreihenwellenformen von Sensoren, die er ersten Mehrheit von Geräteeinheiten (320-1) zugeordnet sind, wobei die Zeitreihenwellenformen Sensordatenwerte enthalten; und
Verarbeiten der Zeitreihenwellenformen unter Verwendung des Prozessors, um mehrere abgeleitete Eingaben zu generieren, wobei die abgeleiteten Eingaben und die Sensordatenwerte zusammen die Sensordaten aufweisen.

11. Verfahren nach Anspruch 1, bei welchem die Fehlersignaturen basierend auf Fehlerzuständen in Arbeitsauftragsgeschichten verbunden mit der ersten Mehrheit von Geräteeinheiten (320-1) gelernt werden.

12. Anlagengegenstandfehlervorhersagesystem, aufweisend:
einen Speicher, eine Benutzerschnittstelle, eine Datenbank, eine Netzschnittstelle und einen Prozessor (450), der mit dem Speicher verbunden ist und konfiguriert ist, um in Verbindung mit ein oder mehr überwachten Einheiten eines Anlagengeräts, die mit ein oder mehr Überwachungssensoren (120, 122) gestaltet sind, zu arbeiten, wobei die Benutzerschnittstelle konfiguriert ist, um eine Benutzereingabe zu empfangen, die einen ersten Gerätezielsatz identifiziert, der eine erste Mehrheit von Geräteeinheiten (320-1) ist, wobei jede Geräteeinheit der ersten Mehrheit von Geräteeinheiten (320-1) durch eine erste Mehrheit von zusammenpassenden Zielparametern gekennzeichnet ist und wobei die ein oder mehr überwachten Einheiten des Anlagengeräts, die mit den ein oder mehr Überwachungssensoren gestaltet sind, wenigstens eine Geräteeinheit enthalten, die nicht im ersten Gerätezielsatz enthalten ist;
wobei die Netzschnittstelle konfiguriert ist, um Sensordaten von der ersten Mehrheit von Geräteeinheiten (320-1) zugeordneten Sensoren zu empfangen;
wobei die Datenbank konfiguriert ist, um Fehlersignaturen, die in den empfangenen Sensordaten enthalten sind, zu speichern;
wobei der Prozessor (450) konfiguriert ist, um ein Lernagenten-Trainingsmodul (540) auf den empfangenen Sensordaten zu betreiben, um einen Fehleragenten zu trainieren, um zu lernen, durch Identifizieren von Mustern oder Beziehungen in den Sensordaten Betriebszustände zu erkennen, die mit dem Auftreten eines Gerätefehlers verbunden sind, durch Lernen, um zwischen normalen Basisliniendaten für den ersten Gerätezielsatz und einem Trainingssatz von Fehlersignaturen für den Gerätezielsatz zu unterscheiden, wobei die normalen Basisliniendaten des ersten Gerätezielsatzes von einem Teil der Sensordaten abgeleitet werden, die mit dem Betrieb der ersten Mehrheit von Geräteeinheiten (320-1) in einem Normalbetrieb verbunden sind, und wobei der Trainingssatz von Fehlersignaturen von einem Teil der Sensordaten abgeleitet wird, die mit dem Betrieb der ersten Mehrheit von Geräteeinheiten (320-1) in einem Fehlermodus verbunden sind;
wobei der Prozessor (450) ferner konfiguriert ist, für den ersten Gerätezielsatz zu bestimmen, ob der Fehleragent konfiguriert ist, um Betriebszustände richtig zu erkennen, die mit dem Auftreten eines Gerätefehlers verbunden sind, um zwischen den normalen Basisliniendaten und dem Trainingssatz von Fehlersignaturen für den Gerätezielsatz zu unterscheiden, durch Testen des Fehleragenten an Beispielfehlern eines Validierungssatzes von Fehlersignaturen, die aus den Sensordaten verbunden mit dem Betrieb der ersten Mehrheit von Geräteeinheiten (320-1) im Fehlermodus gewählt sind;
überwachte Sensorsignalen zu empfangen, die von einem oder mehreren Überwachungssensoren (120, 122) der wenigstens einen Geräteeinheit, die nicht im ersten Gerätezielsatz enthalten ist, erzeugt werden; und
wenn bestimmt wird, dass der Fehleragent konfiguriert ist, um mit dem Auftreten eines Gerätefehlers verbundene Betriebszustände richtig zu erkennen, durch den Prozessor (450) das Lernagenten-Trainingsmodul (540) zu aktivieren, wobei
das Aktivieren enthält:
i) wenn die ein oder mehr Überwachungssensoren eine Teilmenge von Sensoren des ersten Gerätezielsatzes aufweisen, Verwenden des Fehleragenten, um Daten zu überwachen, die in den empfangenen überwachten Sensorsignalen enthalten sind; oder
ii) wenn die ein oder mehr Überwachungssensoren wenigstens einen Sensor mehr als Geräteeinheiten im ersten Gerätezielsatz aufweisen, Umtrainieren des Fehleragenten für die wenigstens eine Geräteeinheit, die nicht im ersten Gerätezielsatz enthalten ist, unter Verwendung von Standardparametern vom Fehleragenten und einer Flatline-Vorgeschichte für den wenigstens noch einen Sensor; und
wobei das Überwachen ein Erkennen eines Betriebszustandes, der ein Gerätefehlerauftreten der wenigstens einen Geräteeinheit identifiziert und dadurch eine Vorhersage eines Fehlers der wenigstens einen Geräteeinheit (110, 112) im Fehlermodus ermöglicht, aus Mustern oder Beziehungen in den in den empfangenen überwachten Sensorsignalen enthaltenen Daten enthält.

13. System nach Anspruch 12, bei welchem die Netzschnittstelle konfiguriert ist, um einen Satz von Zeitreihenwellenformen von den ein oder mehr Überwachungssensoren zu empfangen, wobei die Zeitreihenwellenformen Sensordatenwerte enthalten; und bei welchem der Prozessor (450) mit einem Code konfiguriert ist, um die Zeitreihenwellenformen zu verarbeiten, um mehrere abgeleitete Eingaben zu generieren, wobei die Sensordaten wenigstens eines von einer Teilmenge der Sensordatenwerte und ein oder mehr der abgeleiteten Eingaben enthalten.

14. System nach Anspruch 13, bei welchem die Sensordaten unter Verwendung einer Sensorenmustervorlage identifiziert werden.

15. System nach Anspruch 12, bei welchem die Fehlersignaturen basierend auf Fehlerzuständen in Arbeitsauftragsgeschichten verbunden mit der ersten Mehrheit von Geräteeinheiten (320-1) gelernt werden.

## Revendications

1. Procédé d'utilisation d'une information de signature de défaillance pour surveiller le fonctionnement d'une ou plusieurs unités surveillées d'équipement (110, 112, 320-1) qui sont configurées avec des capteurs (120, 122), le procédé consistant à :
identifier un premier ensemble cible d'équipement comme étant une première pluralité d'unités d'équipement (320-1), dans lequel chaque unité d'équipement de la première pluralité d'unités d'équipement (320-1) est **caractérisée par** une première pluralité de paramètres cibles de correspondance, et dans lequel lesdites une ou plusieurs unités surveillées d'équipement incluent au moins une unité d'équipement qui n'est pas incluse dans le premier ensemble cible d'équipement ;
recevoir des données de capteur issues de capteurs associés à la première pluralité d'unités d'équipement (320-1) ;
stocker des signatures de défaillance, qui sont contenues dans les données de capteur reçues, dans une base de données de signatures de défaillance connue ;
entraîner, au moyen d'un module d'entraînement d'agent d'apprentissage (540), un agent de défaillance à apprendre à détecter des conditions de fonctionnement associées au début d'une défaillance d'équipement, en identifiant des modèles ou des relations au sein des données de capteur, en apprenant à faire la distinction entre des premières données de base normales et un premier ensemble d'entraînement de signatures de défaillance, dans lequel les premières données de base normales sont dérivées d'une partie des données de capteur associées au fonctionnement de la première pluralité d'unités d'équipement (320-1) dans un mode normal, et dans lequel le premier ensemble d'entraînement des premières signatures de défaillance est dérivé d'une partie des données de capteur associées au fonctionnement de la première pluralité d'unités d'équipement (320-1) dans un mode de défaillance ;
déterminer pour le premier ensemble cible d'équipement, au moyen d'un processeur (450), si l'agent de défaillance est configuré pour détecter avec précision des conditions de fonctionnement associées au début d'une défaillance d'équipement pour faire la distinction entre les premières données de base normales et le premier ensemble d'entraînement de signatures de défaillance, en testant l'agent de défaillance sur des exemples de défaillances d'un premier ensemble de validation de signatures de défaillance choisies parmi les données de capteur associées au fonctionnement de la première pluralité d'unités d'équipement (320-1) dans le mode de défaillance ;
recevoir des signaux de capteur surveillés qui sont produits par un ou plusieurs capteurs de surveillance (120, 122) de ladite au moins une unité d'équipement qui n'est pas incluse dans le premier ensemble cible d'équipement ; et
si l'agent de défaillance est déterminé comme étant configuré pour détecter avec précision des conditions de fonctionnement associées au début d'une défaillance d'équipement, activer le module d'entraînement d'agent d'apprentissage (540), dans lequel :
ladite activation consiste à :
i) si lesdits un ou plusieurs capteurs de surveillance comprennent un sous-ensemble de capteurs du premier ensemble cible d'équipement, utiliser l'agent de défaillance pour surveiller des données qui sont incluses dans les signaux de capteur surveillés reçus ; et
ii) si lesdits un ou plusieurs capteurs de surveillance comprennent au moins un capteur de plus que des unités d'équipement dans le premier ensemble cible d'équipement, entraîner de nouveau l'agent de défaillance pour ladite au moins une unité d'équipement qui n'est pas incluse dans le premier ensemble cible d'équipement, en utilisant des paramètres de défaut issus de l'agent de défaillance et l'historique passé dudit au moins un capteur de plus ; et
ladite surveillance consiste à détecter, à partir de modèles ou de relations au sein des données qui sont incluses dans les signaux de capteur surveillés reçus, une condition de fonctionnement identifiant un début de défaillance d'équipement de ladite au moins une unité d'équipement, ce qui permet ainsi la prédiction de défaillance de ladite au moins une unité d'équipement (110, 112) dans le mode de défaillance.

2. Procédé selon la revendication 1, consistant en outre à :
identifier un deuxième ensemble cible d'équipement comme étant une deuxième pluralité d'unités d'équipement (320-2), dans lequel chaque unité d'équipement de la deuxième pluralité d'unités d'équipement (320-2) est **caractérisée par** une deuxième pluralité de paramètres cibles de correspondance, dans lequel la deuxième pluralité de paramètres cibles de correspondance est un sous-ensemble de la première pluralité de paramètres cibles de correspondance, et dans lequel lesdites une ou plusieurs unités surveillées d'équipement (110, 112) incluent au moins une unité d'équipement qui n'est pas incluse dans le deuxième ensemble cible d'équipement ;
recevoir des données de capteur issues de capteurs associés à la deuxième pluralité d'unités d'équipement (320-2) ;
entraîner, au moyen d'un module d'entraînement d'agent d'apprentissage (540) fonctionnant sur les données de capteur reçues provenant des capteurs associés à la deuxième pluralité d'unités d'équipement, un agent de défaillance à apprendre à détecter des conditions de fonctionnement associées au début d'une défaillance d'équipement, en identifiant des modèles ou des relations au sein des données de capteur, en apprenant à faire la distinction entre des deuxièmes données de base normales et un deuxième ensemble d'entraînement de signatures de défaillance, dans lequel les deuxièmes données de base normales sont dérivées d'une partie des données de capteur associées au fonctionnement de la deuxième pluralité d'unités d'équipement (320-2) dans un mode normal, et dans lequel le deuxième ensemble d'entraînement de signatures de défaillance est dérivé d'une partie des données de capteur associées au fonctionnement de la deuxième pluralité d'unités d'équipement (320-2) dans un mode de défaillance ;
déterminer pour le deuxième ensemble cible d'équipement, au moyen du processeur (450), si l'agent de défaillance est configuré pour détecter avec précision des conditions de fonctionnement associées au début d'une défaillance d'équipement pour faire la distinction entre les deuxièmes données de base normales et le deuxième ensemble d'entraînement de signatures de défaillance, en testant l'agent de défaillance sur des exemples de défaillances d'un deuxième ensemble de validation de signatures de défaillance choisies parmi des données de capteur associées au fonctionnement de la deuxième pluralité d'unités d'équipement (320-2) dans le mode de défaillance ;
recevoir des signaux de capteur surveillés qui sont produits par un ou plusieurs capteurs de surveillance (120, 122) de ladite au moins une unité d'équipement qui n'est pas incluse dans le deuxième ensemble cible d'équipement ; et
si l'agent de défaillance est déterminé comme étant configuré pour détecter avec précision des conditions de fonctionnement associées au début d'une défaillance d'équipement, activer le module d'entraînement d'agent d'apprentissage (540), dans lequel :
ladite activation consiste à :
i) si lesdits un ou plusieurs capteurs de surveillance de ladite au moins une unité d'équipement qui n'est pas incluse dans le deuxième ensemble cible d'équipement comprennent un sous-ensemble de capteurs du deuxième ensemble cible d'équipement, utiliser l'agent de défaillance pour surveiller des données qui sont incluses dans les signaux de capteur surveillés reçus qui sont produits par lesdits un ou plusieurs capteurs de surveillance (120, 122) de ladite au moins une unité d'équipement qui n'est pas incluse dans le deuxième ensemble cible d'équipement ; et
ii) si lesdits un ou plusieurs capteurs de surveillance de ladite au moins une unité d'équipement qui n'est pas incluse dans le deuxième ensemble cible d'équipement comprennent au moins un capteur de plus que des unités d'équipement dans le deuxième ensemble cible d'équipement, entraîner de nouveau l'agent de défaillance pour ladite au moins une unité d'équipement qui n'est pas incluse dans le deuxième ensemble cible d'équipement, en utilisant des paramètres de défaut issus de l'agent de défaillance et l'historique passé dudit au moins un capteur de plus ; et
ladite surveillance consiste à détecter, à partir de modèles ou de relations au sein des données qui sont incluses dans les signaux de capteur surveillés reçus qui sont produits par lesdits un ou plusieurs capteurs de surveillance (120, 122) de ladite au moins une unité d'équipement qui n'est pas incluse dans le deuxième ensemble cible d'équipement, une condition de fonctionnement identifiant un début de défaillance d'équipement de ladite au moins une unité d'équipement qui n'est pas incluse dans le deuxième ensemble cible d'équipement, ce qui permet ainsi la prédiction de défaillance de ladite au moins une unité d'équipement qui n'est pas incluse dans le deuxième ensemble cible d'équipement (110, 112) dans le mode de défaillance.

3. Procédé selon la revendication 2, consistant en outre à :
identifier un troisième ensemble cible d'équipement comme étant une troisième pluralité d'unités d'équipement, dans lequel chaque unité d'équipement de la troisième pluralité d'unités d'équipement est **caractérisée par** une troisième pluralité de paramètres cibles de correspondance, dans lequel la troisième pluralité de paramètres cibles de correspondance est un sous-ensemble de la deuxième pluralité de paramètres cibles de correspondance, et dans lequel lesdites une ou plusieurs unités surveillées d'équipement (110, 112) incluent au moins une unité d'équipement qui n'est pas incluse dans le troisième ensemble cible d'équipement ;
recevoir des données de capteur issues de capteurs associés à la troisième pluralité d'unités d'équipement ;
entraîner, au moyen d'un module d'entraînement d'agent d'apprentissage (540) fonctionnant sur les données de capteur reçues provenant des capteurs associés à la troisième pluralité d'unités d'équipement, un agent de défaillance à apprendre à détecter des conditions de fonctionnement associées au début d'une défaillance d'équipement, en identifiant des modèles ou des relations au sein des données de capteur, en apprenant à faire la distinction entre des troisièmes données de base normales et un troisième ensemble d'entraînement de signatures de défaillance, dans lequel les troisièmes données de base normales sont dérivées d'une partie des données de capteur associées au fonctionnement de la troisième pluralité d'unités d'équipement dans un mode normal, et dans lequel le troisième ensemble d'entraînement de signatures de défaillance est dérivé d'une partie des données de capteur associées au fonctionnement de la troisième pluralité d'unités d'équipement dans un mode de défaillance ;
déterminer pour le troisième ensemble cible d'équipement, au moyen du processeur (450), si l'agent de défaillance est configuré pour détecter avec précision des conditions de fonctionnement associées au début d'une défaillance d'équipement pour faire la distinction entre les troisièmes données de base normales et le troisième ensemble d'entraînement de signatures de défaillance, en testant l'agent de défaillance sur des exemples de défaillances d'un troisième ensemble de validation de signatures de défaillance choisies parmi des données de capteur associées au fonctionnement de la troisième pluralité d'unités d'équipement dans le mode de défaillance ;
recevoir des signaux de capteur surveillés qui sont produits par un ou plusieurs capteurs de surveillance (120, 122) de ladite au moins une unité d'équipement qui n'est pas incluse dans le troisième ensemble cible d'équipement ; et
si l'agent de défaillance est déterminé comme étant configuré pour détecter avec précision des conditions de fonctionnement associées au début d'une défaillance d'équipement, activer le module d'entraînement d'agent d'apprentissage (540), dans lequel :
ladite activation consiste à :
i) si lesdits un ou plusieurs capteurs de surveillance de ladite au moins une unité d'équipement qui n'est pas incluse dans le troisième ensemble cible d'équipement comprennent un sous-ensemble de capteurs du troisième ensemble cible d'équipement, utiliser l'agent de défaillance pour surveiller des données qui sont incluses dans les signaux de capteur surveillés reçus qui sont produits par lesdits un ou plusieurs capteurs de surveillance de ladite au moins une unité d'équipement qui n'est pas incluse dans le troisième ensemble cible d'équipement ; et
ii) si lesdits un ou plusieurs capteurs de surveillance de ladite au moins une unité d'équipement qui n'est pas incluse dans le troisième ensemble cible d'équipement comprennent au moins un capteur de plus que des unités d'équipement dans le troisième ensemble cible d'équipement, entraîner de nouveau l'agent de défaillance pour ladite au moins une unité d'équipement qui n'est pas incluse dans le troisième ensemble cible d'équipement, en utilisant des paramètres de défaut issus de l'agent de défaillance et l'historique passé dudit au moins un capteur de plus ; et
ladite surveillance consiste à détecter, à partir de modèles ou de relations au sein des données qui sont incluses dans les signaux de capteur surveillés reçus qui sont produits par lesdits un ou plusieurs capteurs de surveillance de ladite au moins une unité d'équipement qui n'est pas incluse dans le troisième ensemble cible d'équipement, une condition de fonctionnement identifiant un début de défaillance d'équipement de ladite au moins une unité d'équipement qui n'est pas incluse dans le troisième ensemble cible d'équipement, ce qui permet ainsi la prédiction de défaillance de ladite au moins une unité d'équipement qui n'est pas incluse dans le troisième ensemble cible d'équipement (110, 112) dans le mode de défaillance.

4. Procédé selon la revendication 1, dans lequel la première pluralité de paramètres cibles de correspondance inclut au moins l'un de ceux-ci : (i) marque et modèle, et (ii) contexte de fonctionnement.

5. Procédé selon la revendication 2, dans lequel la première pluralité de paramètres cibles de correspondance inclut chacun de ceux-ci : (i) marque et modèle, et (ii) contexte de fonctionnement, et dans lequel la deuxième pluralité de paramètres cibles de correspondance inclut l'un de ceux-ci : (i) marque et modèle, et (ii) contexte de fonctionnement.

6. Procédé selon la revendication 2, dans lequel la première pluralité de paramètres cibles de correspondance inclut : (i) marque, modèle et révision, et (ii) contexte de fonctionnement, et dans lequel la deuxième pluralité de paramètres cibles de correspondance inclut : (i) marque et modèle, et (ii) contexte de fonctionnement.

7. Procédé selon la revendication 1, dans lequel la détermination consiste à déterminer si l'agent de défaillance est susceptible d'être configuré pour faire la distinction entre les premières données de base normales et la première information de signature de défaillance avec une précision qui dépasse un seuil pouvant être configuré.

8. Procédé selon la revendication 2, dans lequel :
la première pluralité d'unités d'équipement (320-1) est d'une première marque, d'un premier modèle et d'une première révision, et est associée à un premier contexte de fonctionnement, et
la deuxième pluralité d'unités d'équipement (320-2) inclut des unités d'équipement qui sont de la première marque, du premier modèle et de la première révision et qui sont associées au premier contexte de fonctionnement, et inclut en outre d'autres unités d'équipement qui sont de la première marque, du premier modèle et d'une deuxième révision différente de la première révision, et qui sont associées au premier contexte de fonctionnement.

9. Procédé selon la revendication 1, dans lequel les unités d'équipement sont des pompes.

10. Procédé selon la revendication 1, consistant à :
recevoir un ensemble de formes d'onde de série temporelle provenant de capteurs associés à la première pluralité d'unités d'équipement (320-1), les formes d'onde de série temporelle incluant des valeurs de données de capteur ; et
traiter, au moyen du processeur, les formes d'onde de série temporelle pour générer une pluralité d'entrées dérivées, dans lequel les entrées dérivées et les valeurs de données de capteur comprennent de manière collective les données de capteur.

11. Procédé selon la revendication 1, dans lequel les signatures de défaillance sont apprises sur la base de conditions de défaut dans un historique des ordres de commande associé à la première pluralité d'unités d'équipement (320-1).

12. Système de prédiction de défaillance d'actifs d'usine comprenant :
une mémoire, une interface d'utilisateur, une base de données, une interface de réseau et un processeur (450) couplé à la mémoire et configuré pour travailler en collaboration avec une ou plusieurs unités surveillées d'équipement d'usine qui sont configurées avec un ou plusieurs capteurs de surveillance (120, 122), dans lequel l'interface d'utilisateur est configurée pour recevoir une entrée d'utilisateur identifiant un premier ensemble cible d'équipement comme étant une première pluralité d'unités d'équipement (320-1), dans lequel chaque unité d'équipement de la première pluralité d'unités d'équipement (320-1) est **caractérisée par** une première pluralité de paramètres cibles de correspondance, et dans lequel lesdites une ou plusieurs unités surveillées d'équipement d'usine qui sont configurées avec lesdits un ou plusieurs capteurs de surveillance incluent au moins une unité d'équipement qui n'est pas incluse dans le premier ensemble cible d'équipement ;
dans lequel l'interface de réseau est configurée pour recevoir des données de capteur issues de capteurs associés à la première pluralité d'unités d'équipement (320-1) ;
dans lequel la base de données est configurée pour stocker des signatures de défaillance qui sont contenues dans les données de capteur reçues ;
dans lequel le processeur (450) est configuré pour faire fonctionner un module d'entraînement d'agent d'apprentissage (540) sur les données de capteur reçues afin qu'il entraîne un agent de défaillance à apprendre à détecter des conditions de fonctionnement associées au début d'une défaillance d'équipement, en identifiant des modèles ou des relations au sein des données de capteur, en apprenant à faire la distinction entre des données de base normales pour le premier ensemble cible d'équipement et un ensemble d'entraînement de signatures de défaillance pour l'ensemble cible d'équipement, dans lequel les données de base normales du premier ensemble cible d'équipement sont dérivées d'une partie des données de capteur associées au fonctionnement de la première pluralité d'unités d'équipement (320-1) dans un mode normal, et dans lequel l'ensemble d'entraînement de signatures de défaillance est dérivé d'une partie des données de capteur associées au fonctionnement de la première pluralité d'unités d'équipement (320-1) dans un mode de défaillance ;
dans lequel le processeur (450) est en outre configuré pour déterminer pour le premier ensemble cible d'équipement si l'agent de défaillance est configuré pour détecter avec précision des conditions de fonctionnement associées au début d'une défaillance d'équipement pour faire la distinction entre les données de base normales et l'ensemble d'entraînement de signatures de défaillance pour l'ensemble cible d'équipement, en testant l'agent de défaillance sur des exemples de défaillances d'un ensemble de validation de signatures de défaillance choisies parmi des données de capteur associées au fonctionnement de la première pluralité d'unités d'équipement (320-1) dans le mode de défaillance ;
pour recevoir des signaux de capteur surveillés qui sont produits par un ou plusieurs capteurs de surveillance (120, 122) de ladite au moins une unité d'équipement qui n'est pas incluse dans le premier ensemble cible d'équipement ; et
si l'agent de défaillance est déterminé comme étant configuré pour détecter avec précision des conditions de fonctionnement associées au début d'une défaillance d'équipement, le processeur (450) est configuré pour activer le module d'entraînement d'agent d'apprentissage (540), dans lequel :
ladite activation consiste à :
i) si lesdits un ou plusieurs capteurs de surveillance comprennent un sous-ensemble de capteurs du premier ensemble cible d'équipement, utiliser l'agent de défaillance pour surveiller des données qui sont incluses dans les signaux de capteur surveillés reçus ; ou
ii) si lesdits un ou plusieurs capteurs de surveillance comprennent au moins un capteur de plus que des unités d'équipement dans le premier ensemble cible d'équipement, entraîner de nouveau l'agent de défaillance pour ladite au moins une unité d'équipement qui n'est pas incluse dans le premier ensemble cible d'équipement, en utilisant des paramètres de défaut issus de l'agent de défaillance et l'historique passé dudit au moins un capteur de plus ; et
ladite surveillance consiste à détecter, à partir de modèles ou de relations au sein des données qui sont incluses dans les signaux de capteur surveillés reçus, une condition de fonctionnement identifiant un début de défaillance d'équipement de ladite au moins une unité d'équipement, ce qui permet ainsi la prédiction de défaillance de ladite au moins une unité d'équipement (110, 112) dans le mode de défaillance.

13. Système selon la revendication 12, dans lequel l'interface de réseau est configurée pour recevoir un ensemble de formes d'onde de série temporelle provenant desdits un ou plusieurs capteurs de surveillance, les formes d'onde de série temporelle incluant des valeurs de données de capteur ; et dans lequel le processeur (450) est configuré avec un code pour traiter les formes d'onde de série temporelle pour générer une pluralité d'entrées dérivées, dans lequel les données de capteur incluent au moins l'un de ceux-ci : un sous-ensemble des valeurs de données de capteur et une ou plusieurs des entrées dérivées.

14. Système selon la revendication 13, dans lequel les données de capteur sont identifiées en utilisant un modèle de capteur.

15. Système selon la revendication 12, dans lequel les signatures de défaillance sont apprises sur la base de conditions de défaut dans un historique des ordres de commande associé à la première pluralité d'unités d'équipement (320-1).
